# EUROPEAN PATENT APPLICATION

(11) **EP 1 602 673 A1**
(43) Date of publication of application: **07.12.2005**
(21) Application number: 04712739.4
(22) Date of filing: 19.02.2004
(51) Int. Cl.: C08F 297/04, C08L 95/00

(54) **BLOCK (CO)POLYMER, BLOCK COPOLYMER COMPOSITION FOR ASPHALT MODIFICATION, PROCESS FOR PRODUCING THE SAME, AND ASPHALT COMPOSITION**

(30) Priority: 07.03.2003 JP 2003061324; 19.09.2003 JP 2003328390
(71) Applicant: Kraton JSR Elastomers K.K., Tokyo 108-0073 (JP)
(72) Inventor: TORII, Masatoshi, Minato-ku, Tokyo 108-0073 (JP); KATO, Hiroshi, Minato-ku, Tokyo 108-0073 (JP); SUZUKI, Masato, Minato-ku, Tokyo 108-0073 (JP); MIYACHI, Takumi, Minato-ku, Tokyo 108-0073 (JP)
(74) Representative: TBK-Patent
(86) International application number: PCT/JP2004/001923
(87) International publication number: WO 2004/078812

(57) **Abstract**

A composition for asphalt modification which comprises
(a) a block (co)polymer represented by general formula (I); (S-B)ₘ-S'ₙ (in formula (I), S and S' are each a polymer block mainly composed of an aromatic vinyl compound, B is a polymer block mainly composed of a conjugated diene, and m and n are each an integer of 0 or 1, provided that m+n is 1 or more), wherein the total combined aromatic vinyl compound content in the block (co) polymer is from more than 10% by weight to 100% by weight, and (b) a block copolymer represented by general formula (II) ; S-B-S, general formula (III); S-B-S' and/or general formula (IV) ; (S-B)₂-X (in formulas (II) to (IV), S, S' and B have the same meanings as given in general formula (I), and X is a residue of a coupling agent), at a block copolymer (a) /block copolymer (b) ratio (weight ratio) of 10-40/90-60; and further, an asphalt composition in which this composition for modification is added to asphalt. There are provided the composition for asphalt modification excellent in solubility in asphalt, excellent in storage stability at high temperatures, further low in melt viscosity and excellent in asphalt characteristics, and the asphalt composition available for road pavement or waterproof sheets.

## Description

### Technical Field

The present invention relates to (1) an aromatic vinyl composition having a specific structure or a block (co)polymer thereof with a conjugated diene, more particularly a block (co)polymer suitable as a compatibilizer which can improve solubility of a block (co)polymer for asphalt modification or a composition thereof in straight asphalt, (2) a block copolymer composition for asphalt modification excellent in solubility in straight asphalt, which contains the block (co)polymer and the block copolymer for asphalt modification, (3) a process for producing the composition, and (4) an asphalt composition excellent in phase separation stability in storage (hereinafter storage stability), excellent in processability and handling properties due to its low viscosity, and further excellent in asphalt binder properties such as softening point, elongation and toughness·tenacity, which is obtained by blending the above-mentioned block copolymer composition for asphalt modification with straight asphalt, or straight asphalt, an aromatic hydrocarbon resin and/or heavy oil, for example, a composition for high-viscosity modified asphalt suitable for drainage properties/low-noise pavement.

### Background Art

Asphalt is low in cost and easily available, so that it has hitherto been widely used for applications such as road pavement, waterproof, soundproof sheets and damping materials.

However, straight asphalt is inferior in toughness·tenacity, softening point, the rate of penetration and the like.

Further, several new problems have been encountered such as a decrease in performance of an asphalt composition caused by further deterioration in quality of straight asphalt involved in improvement in the degree of purification in petroleum refinery, and further, stability in storage due to long-term storage of the asphalt composition. The stability in storage is a phenomenon that its performance, for example, its softening point, deceases as a whole, or that phase separation occurs in storage to cause the difference in its performance between an upper layer and a lower layer to appear.

Such a phenomenon has not hitherto been solved, and has become a serious problem.

With a recent circumstance such as an increase in vehicles running on the roads or speeding up, there has been a demand for retention of more excellent strength and wear resistance for heavy traffic roads or high-speed ways. Further, intending to improve drainage properties and reduce the noise, a demand for high-performance asphalt compositions (asphalt binders for drain pavement) for constructing paved roads having high porosity has also increased, which necessitates a higher softening point and mechanical strength such as toughness·tenacity.

In order to improve these problems, studies of improved asphalt to which various copolymer compositions are added have been attempted.

As specific examples of these various copolymer compositions, there have hitherto been used a styrene-butadiene random copolymer latex (SBR latex), an ethylene-vinyl acetate copolymer (EVA), an ethylene-ethyl acrylate copolymer and the like. However, addition of these copolymers improves the toughness·tenacity, softening point and elongation to some extent, but the improvement is insufficient. Thus, further improvement has been demanded.

Further, in recent years, it has been attempted to modify asphalt by adding a block copolymer of an aromatic vinyl compound and a conjugated diene (SB block copolymer).

For example, in order to improve various physical properties of asphalt, there has been variously proposed an asphalt composition to which a block copolymer having a specific structure is added in which various ether compounds or tertiary amine compounds are used as a microstructure regulator and an organic lithium compound as an initiator (JP-B-47-17319 and JP-B-59-36949). That is to say, asphalt modification by a single use of an A-B-A type linear block copolymer and an (A-B)ₙX type radial block copolymer or a combined use thereof has been disclosed.

According to these disclosed examples, however, binder physical properties such as the softening point and toughness·tenacity of asphalt are considerably improved, but storage stability at high temperatures is not necessarily sufficient.

To this situation, it has recently been reported that an asphalt composition excellent in balance of characteristics such as elongation and toughness·tenacity is obtained by using a block copolymer in which the content of an aromatic vinyl compound is limited within a certain definite range (JP-A-1-254768 and JP-B-5-420).

Further, an asphalt composition excellent in phase separation properties and solubility by a block copolymer coupled with a specific coupling agent has been reported (JP-A-8-225711).

Also in these disclosed examples, however, the balance of characteristics such as asphalt solubility, storage stability, elongation, toughness·tenacity and softening point is not said to be sufficient.

Furthermore, asphalt compositions having excellent storage stability by block copolymers in which the structures of an aromatic vinyl compound and a conjugated diene are limited within a definite range have been reported (JP-A-6-41439, JP-A-9-12898 and JP-A-10-212416).

Also in these disclosed examples, however, the molecular weight increases, so that the melt viscosity increases to deteriorate workability. These examples have therefore a problem with respect to processability. It has been desired to develop an asphalt composition which is improved in the balance of these physical properties and further excellent in processability.

At the present time, there has been generally used a method of increasing the molecular weight of the block copolymer or increasing the amount thereof added to asphalt, thereby increasing the softening point and toughness·tenacity to ensure the balance with elongation.

However, according to this method, there occur the problems that the solubility of the block copolymer in asphalt significantly decreases to prolong the dissolution time, and further that the melt viscosity of the resulting asphalt significantly increases to impair processability. Accordingly, also in attempts to modify asphalt by using the SB block copolymer as described above, satisfactory results have not been obtained yet. Under the present situation, any copolymer for modification excellent in solubility in asphalt and satisfactory in the characteristic balance of the toughness·tenacity, softening point and elongation of asphalt has not hitherto been found, and further improvement has been desired.

An obj ect of the present invention is to provide an asphalt modifier which is excellent in solubility in asphalt, and excellent in storage stability at high temperatures, low in melt viscosity and excellent in asphalt characteristics when an asphalt composition is prepared, by highly controlling a molecular structure, and furthermore, to provide an asphalt composition available for road pavement, waterproof sheets or the like.

### Disclosure of the Invention

The present inventors have made intensive studies in order to develop an asphalt composition having the above-mentioned performance. As a result, it has been found that an asphalt composition containing within a specified range an aromatic vinyl compound or a block (co)polymer thereof with a conjugated diene and a block copolymer for asphalt modification of an aromatic vinyl compound having a structure within a certain specific range with a conjugated diene shows extremely excellent performance to achieve the present object, thus completing the present invention.

That is to say, the present invention relates to a block (co) polymer (hereinafter also referred to as "block (co) polymer (a)") which essentially comprises at least one aromatic vinyl compound polymer block and may contain this and at least one polymer block mainly composed of a conjugated diene, wherein the block (co)polymer is represented by general formula (I); (S-B)ₘ-S'ₙ (in formula (I), S and S' are each a polymer block mainly composed of an aromatic vinyl compound, B is a polymer block mainly composed of a conjugated diene, and m and n are each an integer of 0 or 1, provided that m+n is 1 or more), the total combined aromatic vinyl compound content in the block (co) polymer is from more than 10% by weight to 100% by weight, the vinyl bond content in the polymer block B mainly composed of the conjugated diene is from 10 to 50% by weight, the weight average molecular weight of the polymer block S is from 500 to 20,000, and the total weight average molecular weight of the polymer blocks S and S' is from 1,000 to 30,000.

Here, the weight average molecular weight of the whole block (co)polymer is preferably from 5,000 to 50,000.

Further, the total combined aromatic vinyl compound content in the above-mentioned block (co) polymer is preferably from more than 10% by weight to less than 100% by weight.

Then, the present invention relates to a block copolymer composition for asphalt modification which comprises (a) the above-mentioned block (co)polymer, and (b) a block copolymer (hereinafter also referred to as "block copolymer (b)") comprising at least two polymer blocks mainly composed of an aromatic vinyl compound and at least one polymer block mainly composed of a conjugated diene, wherein the block copolymer is represented by general formula (II); S-B-S, general formula (III) ; S-B-S' and/or general formula (IV); (S-B)₂-X (in formulas (II) to (IV), S, S' and B have the same meanings as given in general formula (I), and X is a residue of a coupling agent), the total combined aromatic vinyl compound content in the block copolymer is from 20 to 70% by weight, the vinyl bond content in the polymer block B mainly composed of the conjugated diene is from 10 to 50% by weight, the weight average molecular weight of the polymer block S is from 10,000 to 20,000, and the weight average molecular weight of the polymer blocks S' is from 10, 000 to 20,000, at a block copolymer (a) /block copolymer (b) ratio (weight ratio) of 10-40/90-60.

It is preferred that the peak molecular weight of block (co)polymer (a) measured by a gel permeation chromatograph (GPC) herein corresponds to 1/80 to less than 1/3 of the peak molecular weight of block copolymer (b).

Then, the present invention relates to a process for producing a block copolymer composition for asphalt modification which comprises each separately polymerizing the above-mentioned block (co) polymer (a) and block copolymer (b) by a solution polymerization method using an organic lithium compound as an initiator in an inert hydrocarbon solvent, and mixing and homogenizing the resulting respective polymer solutions, followed by desolvation.

Further, the present invention relates to a process for producing a block copolymer composition for asphalt modification which comprises concurrently polymerizing block (co)polymer (a) and block copolymer (b) by a solution polymerization method using an organic lithium compound as an initiator in an inert hydrocarbon solvent, and adding the initiator at least twice and an aromatic vinyl compound and a conjugated diene at least once in polymerizing the aromatic vinyl compound and the conjugated diene at a polymerization stage at which they are sequentially added.

Then, the present invention relates to an asphalt composition (hereinafter also referred to "asphalt composition (1)") containing the above-mentioned block copolymer composition and straight asphalt at a block copolymer composition/straight asphalt ratio (weight ratio) of 2-15/85-98.

Further, the present invention relates to an asphalt composition (hereinafter also referred to as "asphalt composition (2)") comprising the above-mentioned block copolymer composition, straight asphalt, an aromatic hydrocarbon resin and heavy oil, at ratios of 1 to 20 parts by weight of the composition, 0 to 40 parts by weight of the aromatic hydrocarbon resin, 0 to 40 parts by weight of the heavy oil and 1 to 60 parts by weight of the total of the aromatic hydrocarbon resin and the heavy oil, based on 100 parts by weight of straight asphalt.

### Brief Description of the Drawings

Fig. 1 is a chart showing molecular weight distribution by gel permeation chromatography of a block copolymer used in Example 1. The abscissa shows molecular weight (log molecular weight), and the ordinate shows molecular weight distribution (% by weight).
Fig. 2 is a photomicrograph of an asphalt composition of Example 1 showing that an asphalt phase and a polymer phase are integrated with each other to turn a sea-island structure into a single phase, and a photomicrograph of an asphalt composition of Comparative Example 2 showing that both phases remain separated from each other.
Fig. 3 is a chart showing molecular weight distribution by gel permeation chromatography of a block copolymer used in Example 3. The abscissa shows molecular weight (log molecular weight), and the ordinate shows molecular weight distribution (% by weight).

### Best Mode for Carrying Out the Invention

The present invention is described in detail below.

Block (co)polymer (a) used in the present invention is a block (co) polymer which essentially comprises polymer blocks S and/or S' mainly composed of an aromatic vinyl compound, and may contain the polymer blocks S and/or S' and a polymer block B mainly composed of a conjugated diene. Block copolymer (b) is a block (co)polymer which comprises polymer blocks S and/or S' mainly composed of an aromatic vinyl compound and a polymer block B mainly composed of a conjugated diene.

The aromatic vinyl compounds used for obtaining block (co)polymer (a) or block copolymer (b) include styrene, t-butylstyrene, α-methylstyrene, p-methylstyrene, divinylbenzene, 1,1-diphenylstyrene, N,N-dimethyl-p-aminoethylstyrene, N,N-diethyl-p-aminoethylstyrene, vinylpyridine and the like. In particular, styrene and α-methylstyrene are preferred.

Further, the conjugated dienes used for obtaining block (co)polymer (a) or block copolymer (b) include 1,3-butadiene, isoprene, 2,3-dimethyl-1,3-butadiene, 1,3-pentadiene, 2-methyl-1,3-pentadiene, 1,3-hexadiene, 4,5-diethyl-1,3--octadiene, 3-butyl-1,3-octadiene, chloroprene and the like. 1, 3-butadiene, isoprene and 1,3-pentadiene are preferred, and more preferred is 1,3-butadiene.

Block (co)polymer (a) is a block (co)polymer which essentially comprises a polymer block mainly composed of the aromatic vinyl compound as described above and may contain this and a polymer block mainly composed of a conjugated diene, and a block (co)polymer which essentially comprises at least one polymer block mainly composed of an aromatic vinyl compound, may contain this and at least one polymer block mainly composed of a conjugated diene, and is represented by general formula (I); (S-B)ₘ-S'ₙ (in formula (I), S and S' are each a polymer block mainly composed of an aromatic vinyl compound, B is a polymer block mainly composed of a conjugated diene, and m and n are each an integer of 0 or 1, provided that m+n is 1 or more) .

A conventional asphalt modifier is unsuitable for practical use, because it has problems with respect to handling properties such as processability and storage stability, although it exhibits sufficient performance as the effect of improving asphalt, in the prior art. Block (co)polymer (a) of the present invention has the function of extremely improving the solubility of a conventional asphalt modifier in asphalt to cover the above-mentioned disadvantages. Accordingly, block (co)polymer (a) is suitable as a compatibilizer therefor.

The total combined aromatic vinyl compound content in block (co)polymer (a) is from more than 10% by weight to 100% by weight, and preferably from more than 10% by weight to less than 100% by weight. Surprisingly, when this content exceeds 10% by weight, the compatibility effect of asphalt and the conventional compatibilizer can be markedly improved in the asphalt composition. When the total combined aromatic vinyl compound content in block (co)polymer (a) is 100% by weight, no polymer block B exists. In such a case, the compatibility effect of asphalt and the conventional compatibilizer can also be exhibited.

Further, the vinyl bond content in the polymer block B mainly composed of the conjugated diene in block (co)polymer (a) is from 10 to 50% by weight. When this content is less than 10% by weight, the compatibility effect is reduced, and it is difficult to obtain the block (co)polymer, from the nature of reaction in a method for producing the (co)polymer. This is therefore unfavorable. On the other hand, exceeding 50% by weight results in a tendency to be inferior in low-temperature characteristics of the asphalt composition, and results in insufficient compatibility effect, which unfavorably results in long dissolution time and poor storage stability. The vinyl bond content is preferably from 12 to 40% by weight.

Furthermore, the weight average molecular weight of the polymer block S (polymer block mainly composed of the aromatic vinyl compound) in block (co)polymer (a) is from 500 to 20,000, and the total weight average molecular weight of the polymer blocks S and S' is from 1,000 to 30, 000. When the weight average molecular weight of the polymer block S exceeds 20,000 and/or the total of S and S' exceeds 30,000, the improving effect of block copolymer (b) becomes insufficient, particularly, the dissolution time in asphalt is significantly prolonged, and no improving effect is observed in storage stability. On the other hand, when the weight average molecular weight of the polymer block S is less than 500 and/or the total of S and S' is less than 1, 000, the dissolution time is shortened, and the viscosity is decreased, whereby processability becomes easy. However, the softening point and toughness·tenacity of the asphalt composition unfavorably become insufficient.

In addition, the weight average molecular weight of the whole block (co) polymer (a) is preferably from 5, 000 to 50, 000. Less than 5,000 results in shortened dissolution time and decreased viscosity, whereby the effect to processability is obtained, but the softening point of the asphalt composition is insufficient. On the other hand, when it exceeds 50,000, the improving effect of block copolymer (b) becomes insufficient, and particularly, the dissolution time in asphalt is significantly prolonged. This is therefore unfavorable.

Further, the polymer block represented by B in general formula (I) is one mainly composed of the conjugated diene, and may contain an aromatic vinyl compound and the like. For example, the combined aromatic vinyl compound can be contained in an amount of 0 to 40% by weight, preferably in an amount of 0 to 30% by weight, based on the total combined aromatic vinyl compound in block (co)polymer (a). The structure thereof may be either random or gradually increasing taper block. The chain length of the block S (and/or the block S') and the block B is adjusted by allowing the combined aromatic vinyl compound to be contained in the block B mainly composed of the conjugated diene, whereby it becomes possible to adjust the compatibility effect. When the amount of the combined aromatic vinyl compound of the block B exceeds 40% by weight, the molecular weight of the block S (and/or the block S') excessively decreases, which unfavorably causes insufficient compatibility effect.

Then, block copolymer (b) used in the composition for asphalt modification of the present invention is represented by S-B-S, S-B-S' or (S-B)₂-X (wherein S, S' and B have the same meanings as given in general formula (I), and X is a residue of a coupling agent).

Here, the total combined aromatic vinyl compound content in block copolymer (b) is from 20 to 70% by weight. When this total combined content is less than 20% by weight, the softening point and toughness·tenacity become insufficient, and moreover, flow deformation resistance at high temperatures also becomes insufficient. On the other hand, when it exceeds 70% by weight, the asphalt composition decreases in the rate of penetration to become hard, and low-temperature elongation thereof decreases. The content is preferably from 20 to 50% by weight.

The vinyl bond content in the polymer block B mainly composed of the conjugated diene in block copolymer (b) is from 10 to 50% by weight. It is difficult to obtain one having a vinyl bond content of less than 10% by weight by the production method concerned. On the other hand, when the content exceeds 50% by weight, the asphalt composition decreases in the rate of penetration to become hard, and low-temperature elongation thereof decreases. The content is preferably from 12 to 45% by weight.

Further, the weight average molecular weight of the polymer blocks S and S' (polymer blocks each mainly composed of the aromatic vinyl compound) in S-B-S, S-B-S' or (S-B)₂X, block copolymer (b) used in the composition for asphalt modification of the present invention, is preferably from 10,000 to 20,000, and more preferably from 12,000 to 18,000. When the weight average molecular weight is less than 10, 000, the softening point and toughness·tenacity are insufficient, and a reduction in flow resistance becomes large. This is therefore unfavorable. On the other hand, when it exceeds 20,000, solubility is significantly deteriorated even under inclusion of block (co)polymer (a), and further, storage stability is deteriorated, resulting in easy phase separation in some cases.

The block B mainly composed of the conjugated diene may contain an aromatic vinyl compound, similarly to block (co)polymer (a). For example, the combined aromatic vinyl compound can be contained in an amount of 0 to 40% by weight, preferably in an amount of 0 to 30% by weight, based on the total combined aromatic vinyl compound in block (co) polymer (b) . The structure thereof may be either random or gradually increasing taper block. The chain length of the block S (and/or the block S') and the block B is adjusted by allowing the combined aromatic vinyl compound to be contained in the block B mainly composed of the conjugated diene, whereby it becomes possible to adjust the compatibility effect. When the amount of the combined aromatic vinyl compound of the block B exceeds 40% by weight, the molecular weight of the block S (and/or the block S') excessively decreases, which unfavorably causes insufficient compatibility effect.

This may be gradually increasing taper block.

The weight average molecular weight of block copolymer (b) is preferably from 60,000 to 400,000, more preferably from 100,000 to 300,000, and particularly preferably from 120,000 to 300,000. When this molecular weight is less than 60,000, the softening point and toughness·tenacity of the resulting asphalt composition are insufficient, and a reduction in flow resistance becomes large. This is therefore unfavorable. On the other hand, exceeding 400,000 results in deteriorated solubility and storage stability, the occurrence of phase separation and extremely increased melt viscosity of the asphalt composition, which unfavorably causes the difficulty of processability and handling properties in some cases.

The melt flow rate (the G method of JIS K7210) as an index of flowability is preferably from 0 to 30, more preferably from 0.01 to 15, and particularly preferably from 0.01 to 10.

Block (co)polymer (a) used in the present invention can be produced, for example, by sequentially polymerizing the aromatic vinyl compound and the conjugated diene in an inert hydrocarbon solvent using an organic lithium compound or the like as a polymerization initiator.

For example, the aromatic vinyl compound is first polymerized, and then, the conjugated diene is polymerized, followed by termination of the reaction, or the aromatic vinyl compound and the conjugated diene are further sequentially added, and the reaction is terminated at the time when a desired structure is obtained, thereby being able to produce block (co)polymer (a). Further, in the polymerization of the conjugated diene, the aromatic vinyl compound may be added in a desired amount as needed to conduct copolymerization.

Further, block copolymer (b) can be produced, for example, by first polymerizing the aromatic vinyl compound, then polymerizing the conjugated diene, in an inert hydrocarbon solvent using an organic lithium compound or the like as a polymerization initiator, and thereafter allowing a coupling agent to react, or allowing the aromatic vinyl compound to react again.

Further, in the polymerization of the conjugated diene, the aromatic vinyl compound may be added in a desired amount as needed to conduct copolymerization.

As the above-mentioned inert hydrocarbon solvent, there is used a hydrocarbon such as pentane, n-hexane, heptane, octane, methylcyclopentane, cyclohexane, benzene or xylene. Of these, cyclohexane is preferred.

As an organic alkali metal compound used as the polymerization initiator, the organic lithium compound is preferred. As the organic lithium compound, there is used an organic monolithium, organic dilithium or organic polylithium compound.

Specific examples thereof include ethyllithium, n-propyllithium, isopropyllithium, n-butyllithium, sec-butyllithium, isoprenyllithium and the like, and they are used in an amount of 0.02 to 2 parts by weight per 100 parts by weight of monomer.

Further, in this case, regulators for a microstructure, that is to say, the vinyl bond content of a conjugated diene moiety, include, for example, Lewis bases such as ethers and amines, specifically diethyl ether, tetrahydrofuran, propyl ether, butyl ether, higher ethers, ether derivatives of polyethylene glycol such as ethylene glycol butyl ether, diethylene glycol dimethyl ether, diethylene glycol dibutyl ether and triethylene glycol butyl ether ethylene glycol dibutyl ether, tertiary amines such as tetramethylethylenediamine, pyridine and tributylamine as the amines, and the like. They are used together with the inert hydrocarbon solvent.

They can be used as a regulator for the structure of the aromatic vinyl compound/conjugated diene, when the aromatic vinyl compound is copolymerized in the polymerization of the polymer block mainly composed of the conjugated diene.

The polymerization reaction is conducted usually at 20 to 120°C, preferably at 30 to 100°C. The polymerization may be conducted either at a constant temperature controlled, or under an increasing temperature without the removal of heat.

As the coupling agent used in block copolymer (b), there is preferably used a bifunctional coupling agent. Such ones include, for example, alkane dihalides such as dibromomethane, dibromoethane, dibromopropane, methylene chloride, dichloroethane, dichloropropane and dichlorobutane, silicon halide compounds such as dichlorosilane, methyldichlorosilane, dimethyldichlorosilane, monoethyldichlorosilane, diethyldichlorosilane, monobutyldichlorosilane, dibutyldichlorosilane, monohexyldichlorosilane, dihexyldichlorosilane, dibromosilane, monomethyldibromosilane and dimethyldibromosilane, diaromatic vinyl compounds such as divinylbenzene and divinylnaphthalene, ester compounds such as ethyl formate, ethyl acetate, butyl acetate, methyl propionate, phenyl acetate, ethyl benzoate and phenyl benzoate, tin compounds such as dibutyldichlorotin and tetrachlorotin, bisphenol A, bisphenol AD, bisphenol F, other epoxy compounds, acid chlorides such as propionic acid chloride and adipic acid dichloride, 1,4-chloromethylbenzene, tolylene diisocyanate and the like.

The combined aromatic vinyl compound amount in block (co)polymer (a) and block copolymer (b) is adjusted by the monomer supply amount in the polymerization at each stage, and the vinyl bond amount of the conjugated diene adjusted as needed is adjusted by changing the amount of the component of the above-mentioned microregulator. Further, the structure of the aromatic vinyl compound/conjugated diene of the polymer block mainly composed of the conjugated diene is also adjusted by the above-mentioned microregulator. The structure adjustment of the aromatic vinyl compound/conjugated diene as used herein means to control a combined state such as a random, taper or block structure of the aromatic vinyl compound combined in the conjugated diene.

Further, the weight average molecular weight of block (co)polymers (a) and (b) is adjusted by the amount of the polymerization initiator, for example, sec-butyllithium, added.

The composition for asphalt modification of the present invention mainly comprises the above-mentioned block copolymer (b), and further contains block (co)polymer (a) as a compatibilizer. The weight ratio of component (a) to component (b) in this composition is 10-40/90-60. When the weight ratio of component (a) is less than 10, the effect to solubility is insufficient. On the other hand, exceeding 40 results in insufficient binder properties. Preferably, it is 10-30/90-70.

Further, in the composition for asphalt modification of the present invention, the peak molecular weight of block (co)polymer (a) measured by a gel permeation chromatograph (GPC) preferably corresponds to 1/80 to less than 1/3 of the peak molecular weight of block copolymer (b) . When this value is less than 1/80, the asphalt softening point becomes insufficient because of its too low molecular weight, unfavorably resulting in failure to obtain the sufficient compatibility effect.

On the other hand, exceeding 1/3 results in failure to obtain the sufficient effect as the compatibilizer, which unfavorably prolongs the dissolution time in asphalt.

The peak ratio as used herein means the ratio of the highest peaks (main peaks) of pluralities of peaks of the respective block copolymers.

In order to produce the composition for asphalt modification of the present invention, a process is preferred in which block (co)polymer (a) and block copolymer (b) are each separately polymerized by a solution polymerization method using an organic lithium compound as an initiator in a hydrocarbon solvent, and the resulting respective polymer solutions are mixed and homogenized, followed by desolvation. For example, the composition can be produced by producing block copolymer (b) as described above, and then, mixing the above-mentioned block (co)polymer (a) solution therewith, followed by desolvation after homogenization.

Here, component (a) can also be independently finished, using a specialized production method. However, in production facilities generally used for block copolymer (b) and the like, it can not be substantially produced, because of the problems of stickiness and incomplete drying. Further, also in specialized facilities, it is unsuitable for mass production, and a disadvantage in cost can not be denied, so that it is practically preferred that desolvation and drying are performed after mixing with component (b) and homogenization.

Further, block (co)polymer (a) can be polymerized at the same time that the above-mentioned block copolymer (b) is polymerized to produce the block copolymer composition of the present invention. For example, as a method applied when the general formula of block (co)polymer (a) is restricted to the S-B structure and the general formula of block copolymer (b) is restricted to the S-B-S structure or the like, in order to produce block copolymer (b) as a first stage, the aromatic vinyl compound is brought into contact with the polymerization initiator (initiator 1) to react, and then, the conjugated diene is added. After the reaction has been completely terminated, the polymerization initiator (initiator 2) is added, and the conjugated diene is added again to initiate the production of block (co)polymer (a) while continuing the production of block copolymer (b). Finally, the aromatic vinyl compound may be allowed to react to produce block copolymers (a) and (b) at the same time, thereby forming the composition. Here, in terms of the control of a molecular structure of the polymer produced, the addition of the initiator at a second stage is preferably performed after the termination of the polymerization of the conjugated diene at the first stage. However, the initiator may be added in the course of the polymerization while adjusting the amount of the conjugated diene added at the first stage, and the addition of the conjugated diene at the second stage may be omitted. Further, the molecular structure of the polymer produced can be controlled with sufficient precision by adjusting the amount of the first-stage and second-stage initiators added, the amount of the first-stage aromatic vinyl compound and conjugated diene compound added, and the amount of the second-stage conjugated diene and aromatic vinyl compound added.

Then, asphalt composition (1) of the present invention is a composition containing the above-mentioned composition for asphalt modification and straight asphalt.

Straight asphalt used herein in asphalt composition (1) is one obtained as residues after atmospheric distillation and steam or vacuum distillation of asphalt base crude oil. Straight asphalt is easily processed and handled, because it is easy to dissolve the block copolymer composition of the present invention.

Straight asphalt is preferably one having a rate of penetration of 50 to 200. When the rate of penetration is less than 50, flexibility at low temperatures tends to be impaired. On the other hand, exceeding 200 results in a tendency to decrease wear resistance and flowability.

As asphalt to which the composition for modification of the present invention is applied, straight asphalt is preferred. However, blown asphalt (asphalt obtained from semi-asphalt base crude oil in the same manner as described above.) or the like may be used instead of straight asphalt.

The weight ratio of the block copolymer composition for modification to straight asphalt in asphalt composition (1) is 2-15/98-85, and preferably 3-13/97-87. When the weight ratio of the block copolymer composition for modification is less than 2, the modifying effect of asphalt is not observed, the softening point is insufficient, and moreover, the rate of penetration and toughness·tenacity are low. On the other hand, when it exceeds 15, the softening point and toughness·tenacity are sufficient, but the dissolution time in asphalt is significantly prolonged, and compatibility is also deteriorated. Moreover, the melt viscosity of the asphalt composition significantly increases, so that processing and handling become difficult.

The block copolymer composition for modification of the present invention can be generally used in the form of pellets, crumbs, powder or the like.

Then, asphalt composition (2) is a composition containing an aromatic hydrocarbon resin and/or heavy oil, in addition to the above-mentioned composition for asphalt modification and straight asphalt similar to that described above.

The aromatic hydrocarbon resin as used herein means one containing rosin and a derivative thereof, a terpene resin, a petroleum resin and a derivative thereof, a coumarone-indene resin, an alkylphenol resin, an alkyd resin or the like.

Further, the heavy oil means a vegetable oil such as rice bran oil or soybean oil, an animal oil such as fish oil or whale oil, or a petroleum heavy hydrocarbon oil such as cylinder oil or lubricating oil. However, in view of economical efficiency and the like, a petroleum heavy hydrocarbon oil, above all, an aromatic process oil is preferred.

As for the compounding ratio in asphalt composition (2), the above-mentioned composition for asphalt modification is from 1 to 20 parts by weight and preferably from 3 to 18 parts by weight, the aromatic hydrocarbon resin is from 0 to 40 parts by weight, the heavy oil is from 0 to 40 parts by weight, and the total of the aromatic hydrocarbon resin and the heavy oil is from 1 to 60 and preferably from 5 to 40 parts by weight, based on 100 parts by weight of the above-mentioned straight asphalt.

When the amount of the composition for asphalt modification incorporated is less than 1 part by weight, the modifying effect of asphalt is not observed, the softening point is insufficient, and moreover, the rate of penetration and toughness·tenacity are low. On the other hand, when it exceeds 20 parts by weight, the softening point and toughness·tenacity are sufficient, but the dissolution time in asphalt is significantly prolonged, and compatibility is also deteriorated. Moreover, the melt viscosity of the asphalt composition significantly increases, so that processing and handling become difficult.

Further, when the total amount of the aromatic hydrocarbon resin and the heavy oil incorporated is less than 1 part by weight, flowability and solubility are inferior. On the other hand, exceeding 60 parts by weight results in the low softening temperature and toughness·tenacity, and in brittleness.

The asphalt compositions (1) and (2) of the present invention are usually produced by adding the above-mentioned block copolymer composition for modification or this composition and the aromatic hydrocarbon resin and/or the heavy oil to straight asphalt melted by heating at 140 to 190°C, under agitation, and mixing them.

In the asphalt compositions (1) and (2) of the present invention, an additional styrene-butadiene-styrene block copolymer or styrene-isoprene-styrene block copolymer can be used together in small amounts. Further, it is possible to use in combination an additional thermoplastic elastomer or thermoplastic resin, for example, an additional polymer such as a styrene-butadiene rubber latex, an ethylene-vinyl acetate copolymer, an ethylene-ethyl acrylate copolymer, atactic polypropylene, 1,2-polybutadiene or ethylene-propylene rubber.

In this case, the block copolymer composition for modification of the present invention and the above-mentioned additional polymer can also be previously kneaded at any ratio, and then, pelletized or pulverized to use.

Further, an additive such as a filler such as silica, talc or calcium carbonate, a pigment, an antiaging agent, a crosslinking agent or a flame retardant can be incorporated into the asphalt compositions (1) and (2) of the present invention. Further, when the composition is used for road pavement, it is also possible to add gravel.

### Examples

The present invention will be illustrated in greater detail with reference to the following examples, but the invention should not be construed as being limited thereto.

In the examples, parts and percentages are by weight basis, unless otherwise specified.

Further, various evaluations in the examples were determined as follows.

### Characteristics of Block Copolymers

### (1) Weight Average Molecular Weight (Mw)

For the measurement of weight average molecular weight, gel permeation chromatography (HLC-8220) manufactured by Tosoh Corporation was used, and Ultrabondagel E750A manufactured by Waters was used as a column. Tetrahydrofuran was used as a solvent, and the measurement was made under measurement conditions of a temperature of 45 °C, a flow rate of 1.0 ml/min, a sample concentration of 0.1% and an injection amount of 20 µl. The molecular weight is shown as a standard polystyrene-reduced value.

### (2) Analysis of Peak Molecular Weights and Contents of SBS and SB

A calibration curve was prepared using standard polystyrene (manufactured by Shell Chemical Co., Ltd (USA)), and the peak molecular weight was calculated from the chromatograph obtained above. Further, the content was similarly calculated from the area ratio of respective compositions of the chromatograph.

### (3) Combined Styrene Content

Using an infrared spectroscopic analyzer (Fourier transform infrared spectroscopic analyzer manufactured by Perkin-Elmer, Inc.), the content of styrene was calculated from the absorption intensity at a wavelength of 699 cm⁻¹ by a calibration curve method.

### (4) Quantitative Analysis of Vinyl Bond Content in Butadiene

Based on analysis results obtained above in the measurement range of 450 to 1,200 cm⁻¹, the vinyl bond content in butadiene was calculated by the Morello's method.

### (5) Analysis of Melt Flow Rate (MFR(G))

For this analysis, an auto melt indexer (Type TP-404) manufactured by Tester Sangyo Co., Ltd. was used. As a sample for analysis, the above-mentioned composition was used, and measured according to the G method of JIS-K7210 (200°C, a load of 5 kg).

### Characteristics of Asphalt Composition

### (1) Dissolution Time A/B

The dissolution time A was taken as the time required until no block polymer solid grain came to be observed when the contents were collected in small amounts during asphalt mixing in preparing the asphalt composition and applied onto a polyester (Tetron) sheet, followed by visual observation.

The asphalt composition has hitherto been evaluated for a sample judged as dissolved by the dissolution time A, thereby deciding its performance. However, as a result of investigation, it has been found that a phase structure of asphalt and a polymer in a micro region has a significant influence on asphalt properties. It has come to be known that particularly, storage stability as the asphalt composition is deteriorated, when phase separation is observed in the micro region even though the composition is judged as dissolved by the dissolution time A. Also in the market, it has been recognized that a state in which a single phase is formed in the micro region is indispensable, in order to sufficiently exhibit product performance as the asphalt composition and to prevent variations in quality. For the above reason, evaluation by the dissolution time B was performed.

The dissolution time B was determined in the following manner. In the same preparation of the asphalt composition as described above, the contents in the mixture was collected in small amounts, and the asphalt mixture was placed on a slide glass heated on a hot plate. Then, a cover glass was further placed thereon to develop the mixture thinly. The mixture developed on the cover glass was observed and compared under a transmission microscope, enlarging it to a magnification of 200X. The dissolution time B was taken as the time when a sea-island structure of an asphalt phase and a polymer phase was turned into a single phase.

### (2) Toughness·Tenacity

In mixing in the preparation of the asphalt composition, it is preferred in terms of sufficient exhibition of its performance that the asphalt phase and the polymer phase are homogeneously dispersed to show the single phase in the sea-island structure. However, in some Comparative Examples, there were combinations of substantially non-compatible systems which formed no single phase even by mixing for exceeding 15 hours. The composition which forms no single phase even by stirring for as much as 8 hours or more can not be subjected to practical use. Tentatively, even when mechanical mixing is half forced to produce the asphalt composition, the performance represented by storage stability is insufficient. In these Comparative Examples, mixing was terminated at the elapse of 8 hours which was assumed to be practically a permissible range, and the compositions were subjected to the performance evaluation. Further, also considering the convenience of evaluation, the mixing time including that in Examples was 8 hours without exception, and the following measurement of physical properties was performed for the compounds obtained by mixing for 8 hours.

As for a test method of the asphalt mixture subjected to this test, measurement was made in accordance with a test method described in "Manual of Pavement Test Methods" (published by Japan Road Association, November, 1988).

### (3) As for a test method of the asphalt mixture subjected to the test, measurement was made in accordance with JIS K2207.

### (4) Melt Viscosity

As for a test method of the asphalt mixture subjected to this test, the melt viscosity was measured by using a B type viscometer.

### (5) Storage Stability

The asphalt mixture subjected to this test was poured into a container made from an aluminum can, and allowed to stand still in an oven under an atmosphere of nitrogen at 180°C for 72 hours, followed by cooling at room temperature. The aluminum can was divided into three parts, upper, intermediate and lower portions. For samples of the upper and lower portions excluding the intermediate portion, the following evaluation was performed.

### Decision of Surface Skinned State

The surface state of the upper sample was observed. One in which skinning due to polymer deterioration occurred was decided as x, and a state of no skinning was decided as ○. The results thereof are described in Tables 1 and 2.

### Difference in Softening Point after Storage

The softening point of the upper and lower samples was measured. The difference in softening point indicating the degree of polymer separation was evaluated and described in Tables 1 and 2.

### Example 1

### Preparation of Block Copolymer Composition

### (1) Polymerization of Block (Co)polymer (a)

The air in a stainless steel-made polymerization vessel having an internal volume of 100 liters, which was equipped with a jacket and a stirrer, was sufficiently replaced by nitrogen. Then, the vessel was charged with 20 kg of cyclohexane and 0.6 kg of styrene, and hot water was passed through the jacket to adjust the contents to 40°C.

Then, 6 g of sec-butyllithium was added to initiate polymerization. After the polymerization of styrene was completed, 1.4 kg of 1,3-butadiene was slowly added while adjusting the temperature of the contents to 80°C.

After the polymerization of the block B was terminated, 3 ml of methanol was added, followed by stirring for 10 minutes. Then, the resulting solution was transferred to a blend vessel.

### (2) Polymerization of Block Copolymer (b)

Similarly to (1), the air in a stainless steel-made polymerization vessel having an internal volume of 100 liters, which was equipped with a jacket and a stirrer, was sufficiently replaced by nitrogen. Then, the vessel was charged with 50 kg of cyclohexane and 2.4 kg of styrene, and hot water was passed through the jacket to heat the contents to 40°C.

Then, 11 g of sec-butyllithium was added to initiate polymerization. After the polymerization of styrene was completed, 5.6 kg of 1,3-butadiene was slowly added while adjusting the temperature of the contents to 80°C. After the polymerization of the block B was terminated, 4 g of dibromoethane was added as a coupling agent, and allowed to react for 30 minutes. After the reaction, 1 ml of methanol was added, followed by stirring for 10 minutes. Then, the resulting solution was transferred to the blend vessel.

### (3) Preparation of Composition

After the above-mentioned block copolymer components (a) and (b) were mixed with each other, the contents was taken out of the blend vessel, and 50 g of 2, 6-di-t-butyl-4-methylphenol (BHT) as an antioxidant was added thereto. This mixed polymer solution was steam stripped. The resulting polymer was converted to crumb form with a crusher, and dried by hot air at 80°C to obtain a block copolymer composition.

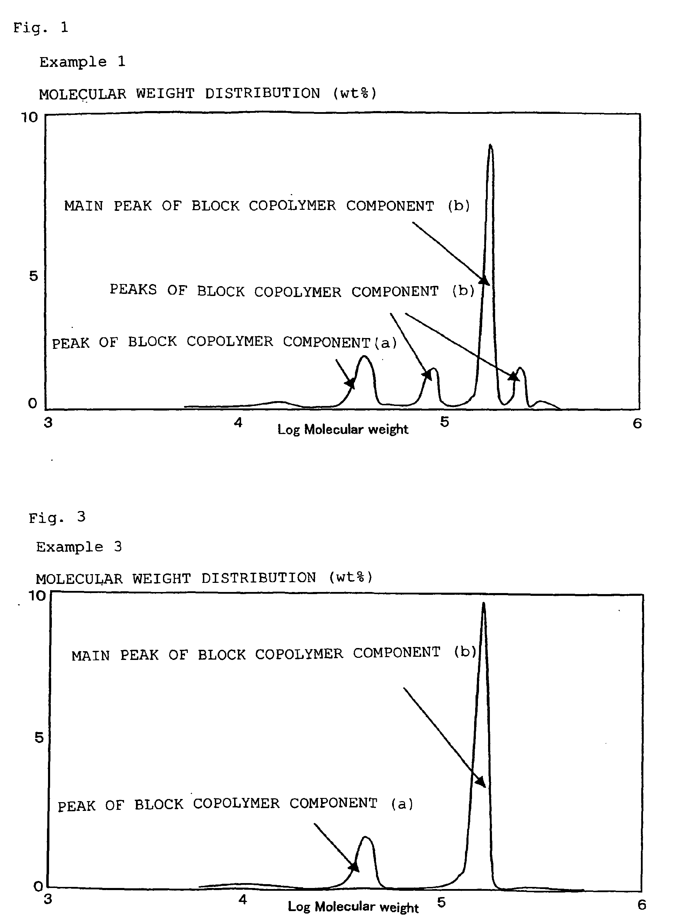

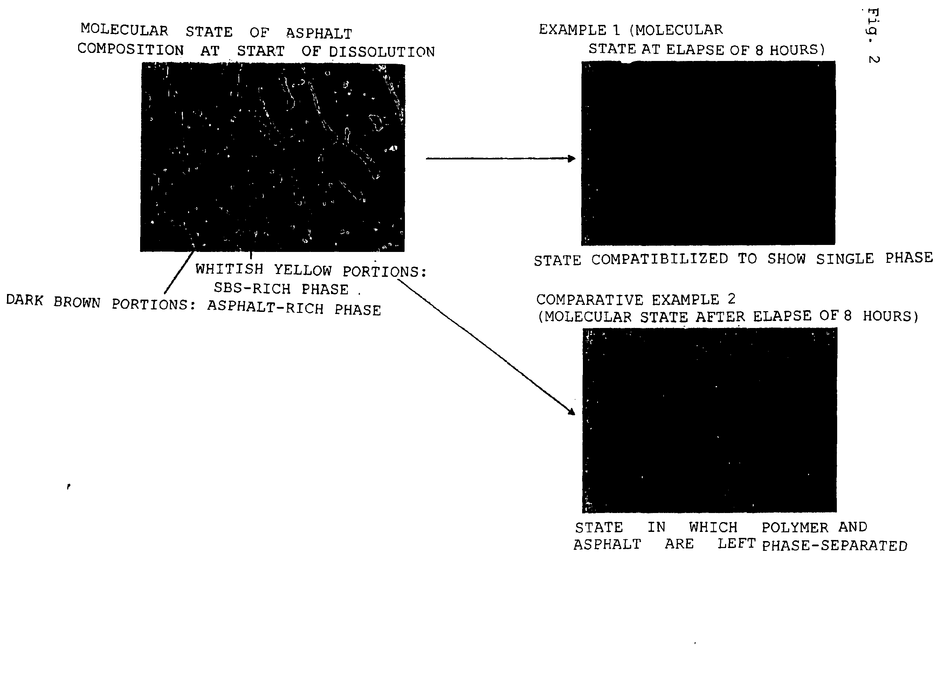

A chart showing molecular weight distribution of this block copolymer composition according to gel permeation chromatography is shown in Fig. 1.

### Preparation of Asphalt Composition

Straight asphalt having a rate of penetration of 70 (manufactured by Kyodo Petroleum Co., Ltd., 60/80) (570 g) and 30 g of the above-mentioned block copolymer composition were mixed by a stirrer (TK Homomixer manufactured by Tokushu Kika Kogyo Co., Ltd., 10, 000 rpm) to prepare an asphalt composition. The evaluation results of the respective characteristics are shown in Table 1.

A photomicrograph of this composition after the elapse of 8 hours is shown in Fig. 2. In a state of the dissolution time of the asphalt composition, a block copolymer composition-rich phase (island portions) of whitish yellow portions and an asphalt-rich phase (sea portions) of dark brown portions are separated from each other. However, after the elapse of 8 hours, it is known that the sea-island structure of the asphalt phase and the block copolymer composition phase is turned into the single phase (see original paper).

Examples 2, 5 to 7, 13, 15, 16, 18, 20, 23 and 24

Block copolymers and block copolymer compositions for asphalt modification shown in Table 1 were obtained and asphalt compositions were prepared in the same manner as with Example 1 with the exception that the amounts of styrene, 1, 3-butadiene and sec-butyllithium charged were changed, and the performance thereof was evaluated. The evaluation results of the respective characteristics are shown in Table 1.

### Example 3

Block copolymer (b) was prepared in the following manner. The same stainless steel-made polymerization vessel as used in Example 1 was charged with 50 kg of cyclohexane, 1. 2 g of ethylene glycol diethyl ether and 1.2 kg of styrene, and hot water was passed through the jacket to adjust the contents to 40°C. Then, 6 g of sec-butyllithium was added to initiate polymerization. After the polymerization of styrene was completed, 5.6 kg of 1, 3-butadiene was slowly added while passing cold water through the jacket so as to adjust the temperature of the contents to 80°C. After the polymerization of the butadiene block was terminated, 1.2 kg of styrene was further added, and allowed to nearly completely react. After the reaction was terminated, 1 ml of methanol was added, followed by stirring for 10 minutes. Thereafter, the resulting solution was transferred to a blend vessel. Then, after the same block copolymer (a) as obtained in Example 1 and the above-mentioned component (b) were mixed with each other, the same operation as with Example 1 was conducted, and the performance thereof was evaluated. The evaluation results of the respective characteristics are shown in Table 1. Further, a chart showing molecular weight distribution of this block copolymer composition according to gel permeation chromatography is shown in Fig. 3.

### Example 4

Block copolymer (a) was produced in the following manner. That is to say, the same stainless steel-made polymerization vessel as used in Example 1 was charged with 20 kg of cyclohexane and 0.45 kg of styrene, and hot water was passed through the jacket to adjust the contents to 40°C.

Then, 7 g of sec-butyllithium was added to initiate polymerization.

After the polymerization of styrene was completed, 2.1 kg of 1,3-butadiene was slowly added while passing cold water through the jacket so as to adjust the temperature of the contents to 80°C. After the polymerization of the block B was terminated, 0.45 kg of styrene was further added, and allowed to nearly completely react. After the reaction was terminated, 3 ml of methanol was added, followed by stirring for 10 minutes. Thereafter, the resulting solution was transferred to a blend vessel.

Block copolymer (b) shown in Table 1 was obtained by conducting polymerization in the same manner as with Example 1 with the exception that the amounts of styrene, 1, 3-butadiene, sec-butyllithium and ethylene glycol diethyl ether charged were changed. The same operations as with Example 1 were conducted to obtain a block copolymer composition and an asphalt composition, and the performance thereof was evaluated. The evaluation results of the respective characteristics are shown in Table 1.

### Example 8

The polymerization vessel used in Example 1 was charged with 50 kg of cyclohexane and 0.8 kg of styrene, and hot water was passed through the jacket to adjust the contents to 40°C.

Then, 3.2 g of sec-butyllithium was added to initiate polymerization. After the polymerization of styrene was completed, 1.8 kg of 1,3-butadiene was slowly added while passing cold water through the jacket so as to adjust the temperature of the contents to 80°C. After the polymerization of the block B was terminated, 2.2 g of sec-butyllithium was added, and 2.4 kg of 1, 3-butadiene was slowly added. After the reaction of the block B was terminated, 1.1 kg of styrene was further added. After the reaction was terminated, 1 ml of methanol was added, followed by stirring for 10 minutes. Then, 50 g of 2,6-di-t-butyl-4-methylphenol (BHT) was added.

This polymerization solution was steam stripped in the same manner as with Example 1, and the resulting polymer was dried to obtain a block copolymer composition. The performance thereof was evaluated. The evaluation results of the respective characteristics are shown in Table 1.

### Example 9

The polymerization vessel used in Example 1 was charged with 20 kg of cyclohexane and 0.32 kg of styrene, and hot water was passed through the jacket to adjust the contents to 40°C. Then, 6 g of sec-butyllithium was added to initiate polymerization. After the polymerization of styrene was completed, 1.38 kg of 1, 3-butadiene and 0.3 kg of styrene were evenly slowly added in three parts while passing cold water through the jacket so as to adjust the temperature of the contents to 80°C. After the polymerization was terminated, 3 ml of methanol was added, followed by stirring for 10 minutes to obtain block copolymer (a). Then, block copolymer (b) was obtained, an asphalt composition was prepared, and the performance thereof was evaluated, in the same manner as with Example 1. The evaluation results of the respective characteristics are shown in Table 1.

### Example 10

The polymerization vessel used in Example 1 was charged with 20 kg of cyclohexane, 8 g of ethylene glycol diethyl ether and 0.44 kg of styrene, and hot water was passed through the jacket to adjust the contents to 40°C. Then, 5 g of sec-butyllithium was added to initiate polymerization. After the polymerization of styrene was completed, 1.38 kg of 1,3-butadiene and 0.18 g of styrene were concurrently slowly added while passing cold water through the jacket so as to adjust the temperature of the contents to 80°C, and allowed to nearly completely react. After the reaction was terminated, 3 ml of methanol was added, followed by stirring for 10 minutes to obtain block copolymer (a). Then, block copolymer (b) was obtained and mixed with the above-mentioned block copolymer (a) to obtain a block copolymer composition, an asphalt composition was prepared, and the performance thereof was evaluated, in the same manner as with Example 1. The evaluation results of the respective characteristics are shown in Table 1.

### Examples 11 and 19

Block copolymer compositions and asphalt compositions were obtained in the same manner as with Example 10 with the exception that the amounts of styrene, 1,3-butadiene, sec-butyllithium and ethylene glycol diethyl ether charged were changed in the polymerization of block copolymer (a), and the performance thereof was evaluated. The evaluation results of the respective characteristics are shown in Table 1.

### Example 12

A block copolymer composition and an asphalt composition were obtained in the same manner as with Example 1 with the exception that the amounts of styrene, 1,3-butadiene, sec-butyllithium and ethylene glycol diethyl ether charged were changed in the polymerization of block copolymer (b), and the performance thereof was evaluated. The evaluation results of the respective characteristics are shown in Table 1.

### Examples 14 and 21

Block copolymers and block copolymer compositions for asphalt modification shown in Table 2 were obtained and asphalt compositions were prepared in the same manner as with Example 4 with the exception that the amounts of styrene, 1, 3-butadiene and sec-butyllithium charged were changed, and the performance thereof was evaluated. The evaluation results of the respective characteristics are shown in Table 2.

### Example 17

Block copolymer (a) was obtained in the same manner as with Example 11 with the exception that the amounts of styrene, 1,3-butadiene, sec-butyllithium and ethylene glycol diethyl ether charged were changed.

Block copolymer (b) was obtained by the same polymerization as with Example 4 with the exception that the amounts of styrene, 1,3-butadiene, sec-butyllithium and ethylene glycol diethyl ether charged were changed. The block copolymers and a block copolymer composition shown in Table 2 were obtained, an asphalt composition was prepared, and the performance thereof was evaluated. The evaluation results of the respective characteristics are shown in Table 2.

### Example 22

Block copolymers and a block copolymer composition shown in Table 2 were obtained and an asphalt composition was prepared in the same manner as with Example 3 with the exception that the amounts of styrene, 1,3-butadiene and sec-butyllithium charged were changed, and the performance thereof was evaluated. The evaluation results of the respective characteristics are shown in Table 2.

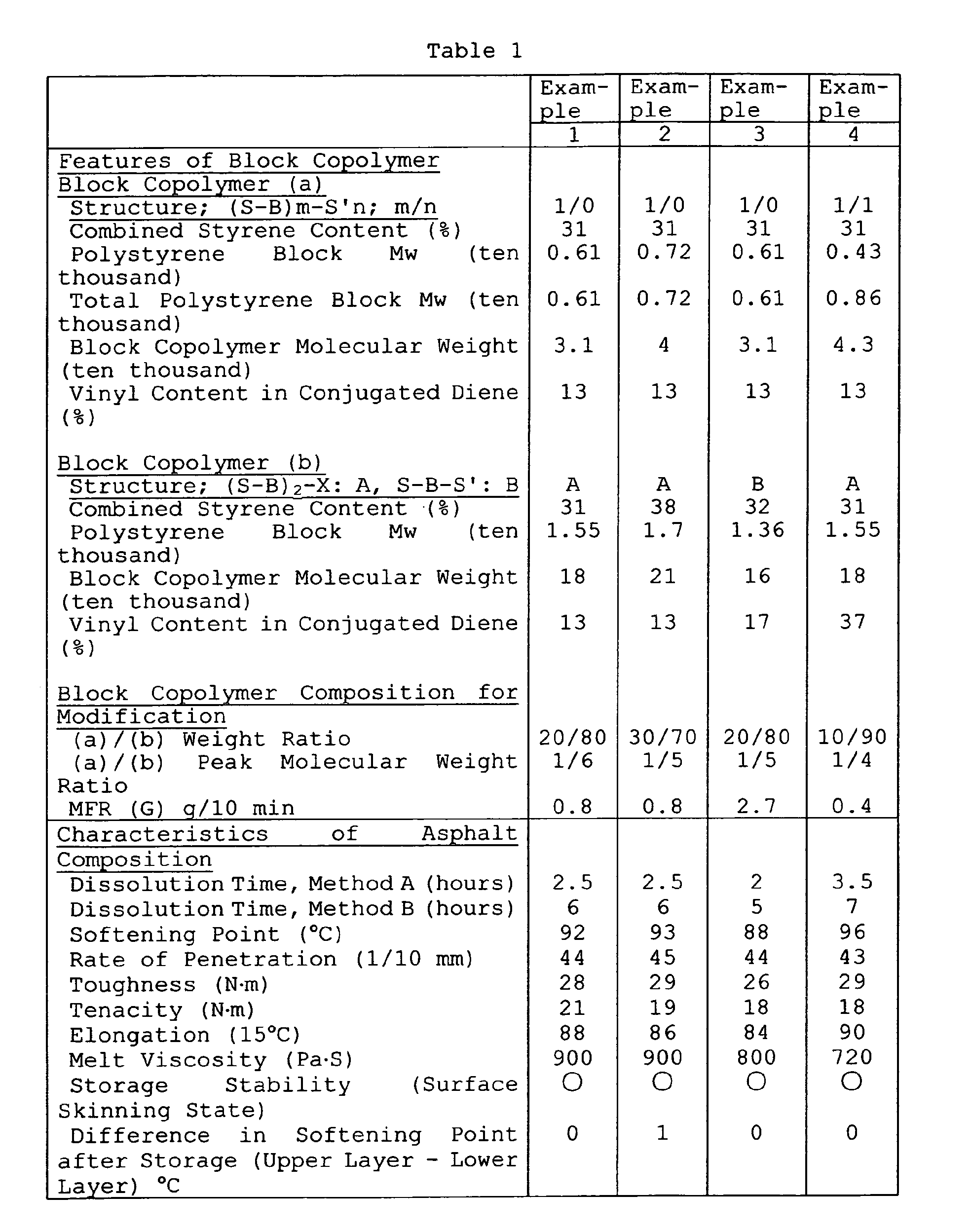

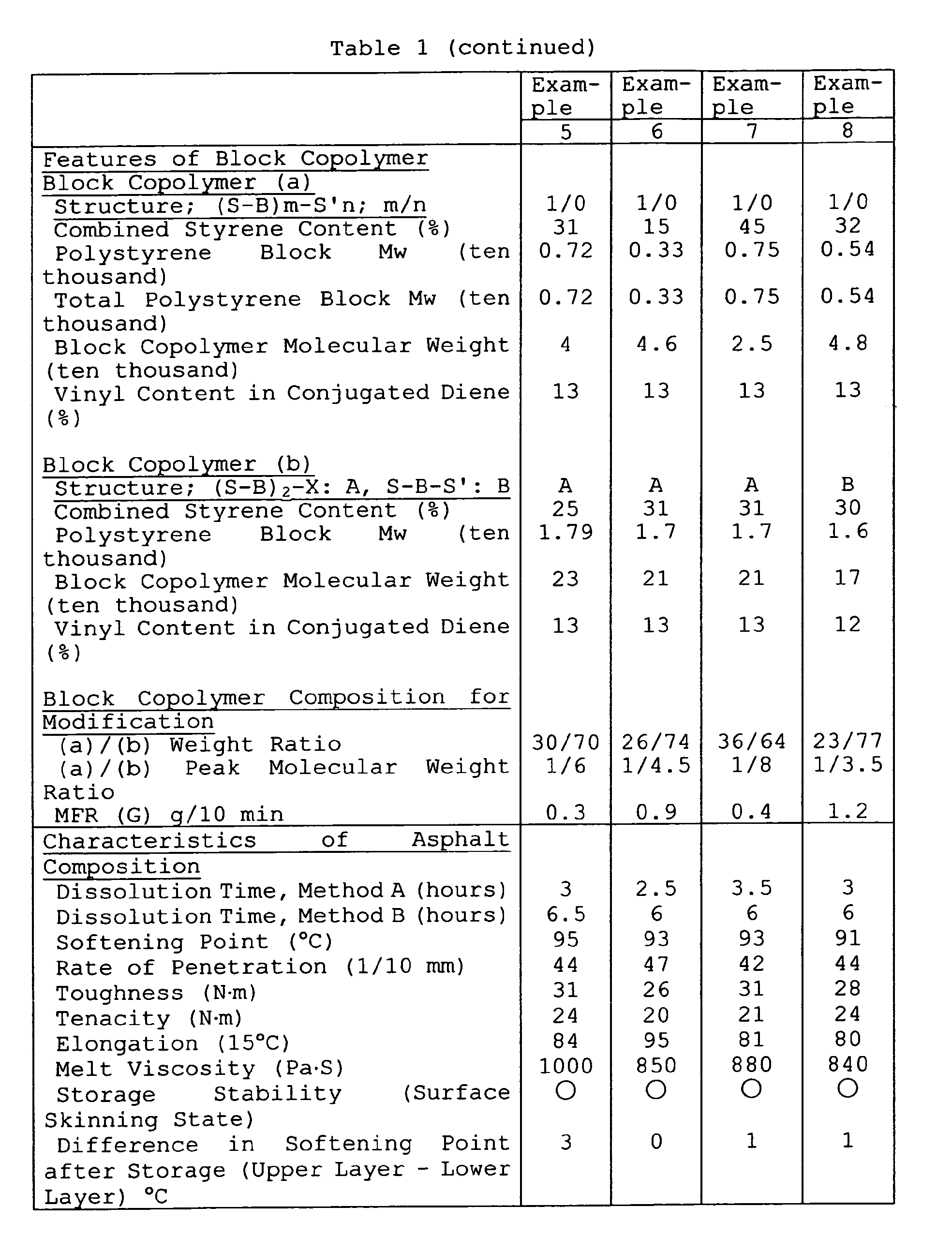

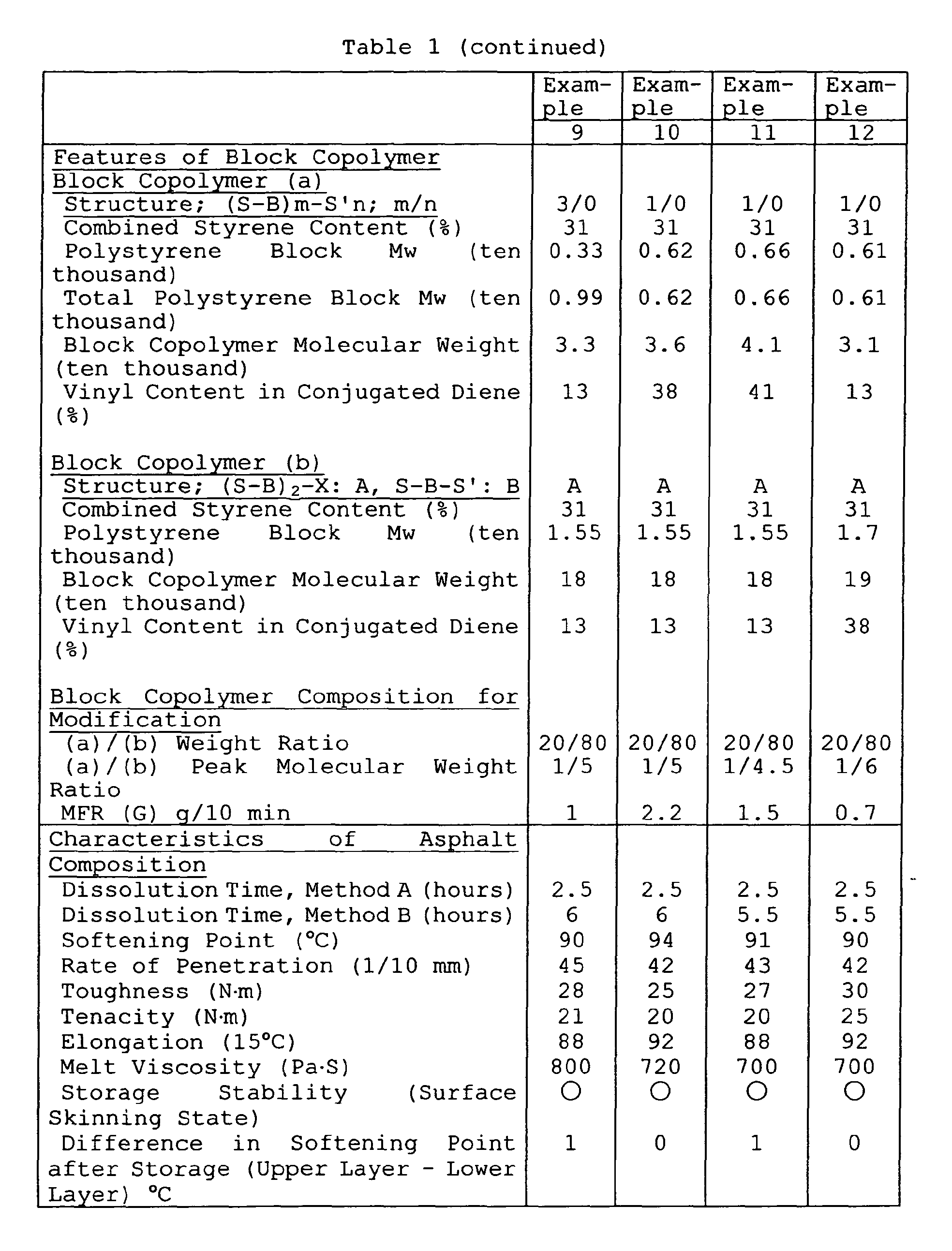

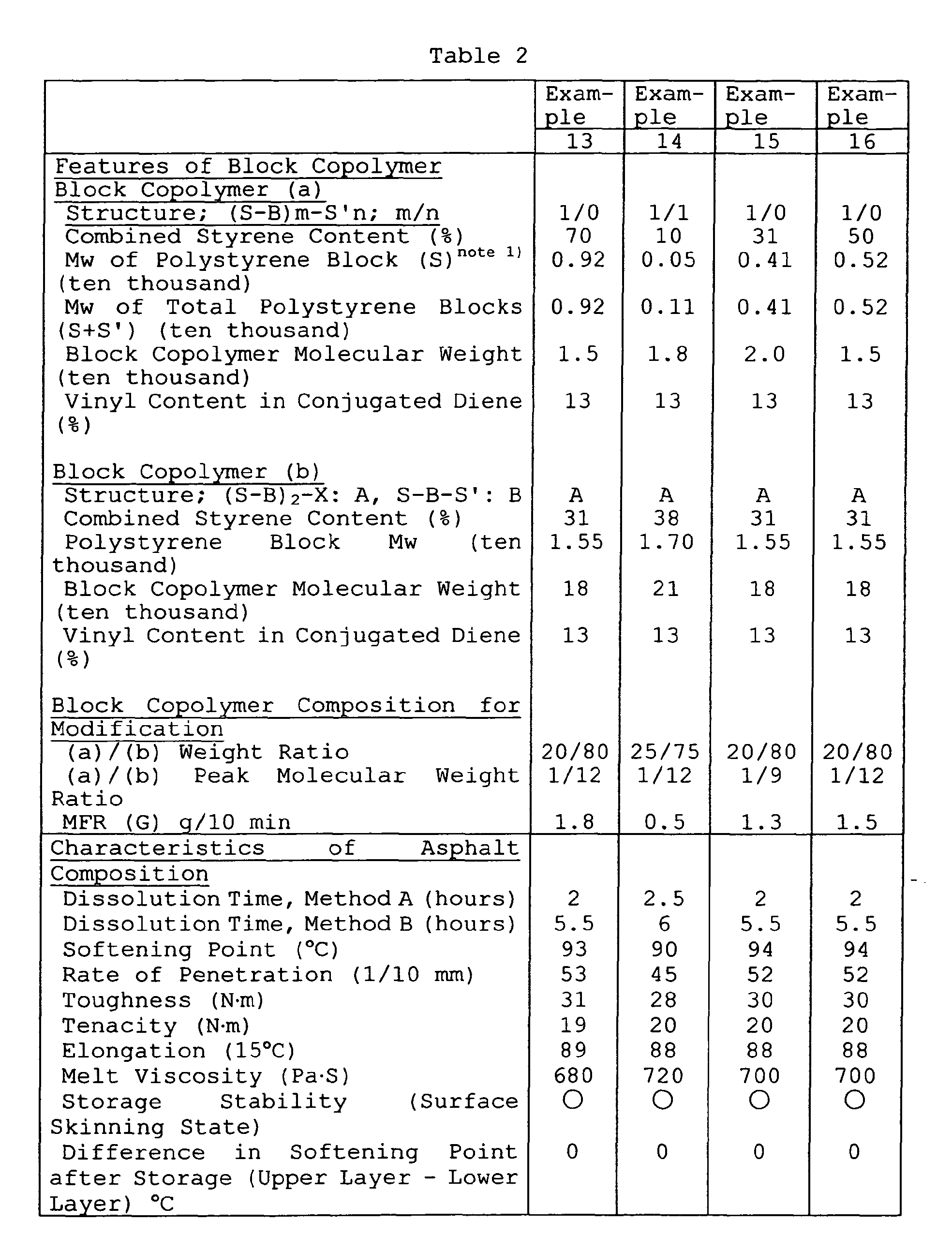

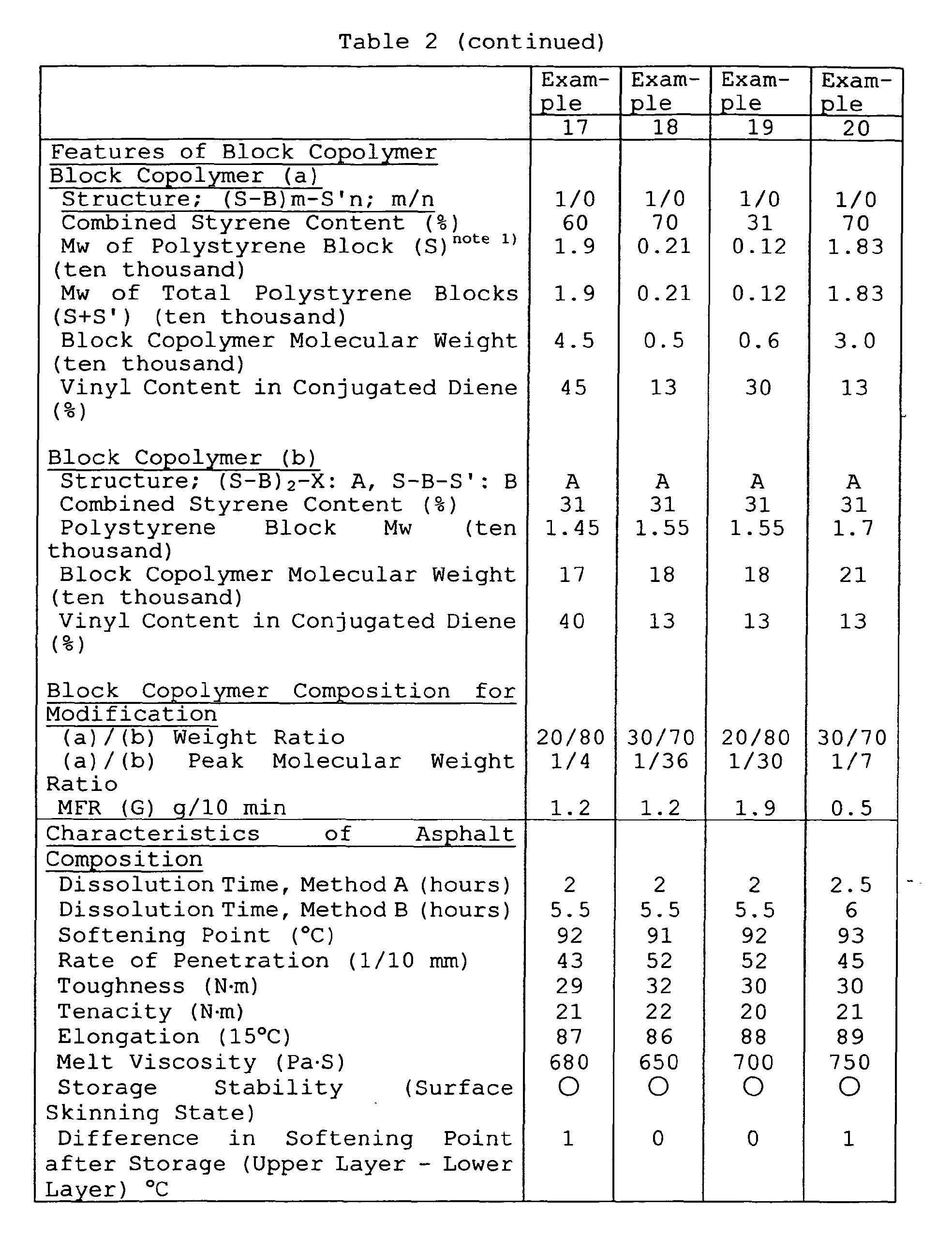

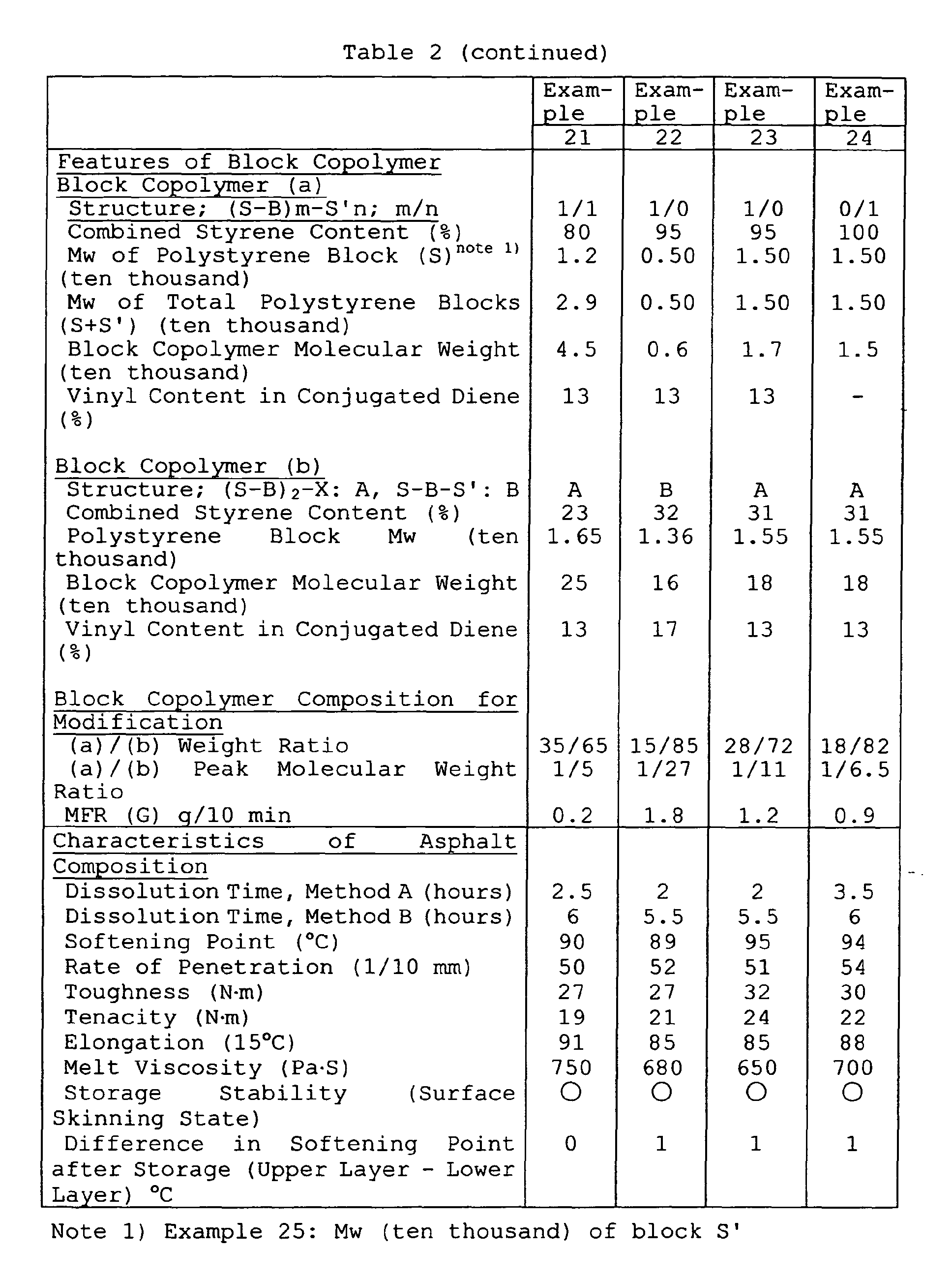

### Comparative Example 1

Operations were performed in the same manner as with Example 1 with the exception that block copolymer (a) was not used. The results thereof are shown in Table 3.

### Comparative Examples 2, 3 and 6 to 10

Block copolymers were obtained and asphalt compositions were prepared in the same manner as with Example 1 with the exception that the amounts of styrene, 1,3-butadiene, sec-butyllithium and ethylene glycol diethyl ether charged were changed, and the performance thereof was evaluated. The evaluation results of the respective characteristics are shown in Table 3. Further, a photomicrograph of the composition of Comparative Example 2 is shown in Fig. 2. This indicates that a block copolymer composition phase and asphalt are left phase-separated in this asphalt composition.

### Comparative Example 4

Operations were performed in the same manner as with Example 3 with the exception that block copolymer (a) was not used. The results thereof are shown in Table 3.

### Comparative Example 5

Block copolymers were obtained and an asphalt composition was prepared in the same manner as with Example 3 with the exception that the amounts of styrene, 1,3-butadiene and sec-butyllithium charged were changed, and the performance thereof was evaluated. The evaluation results of the respective characteristics are shown in Table 3.

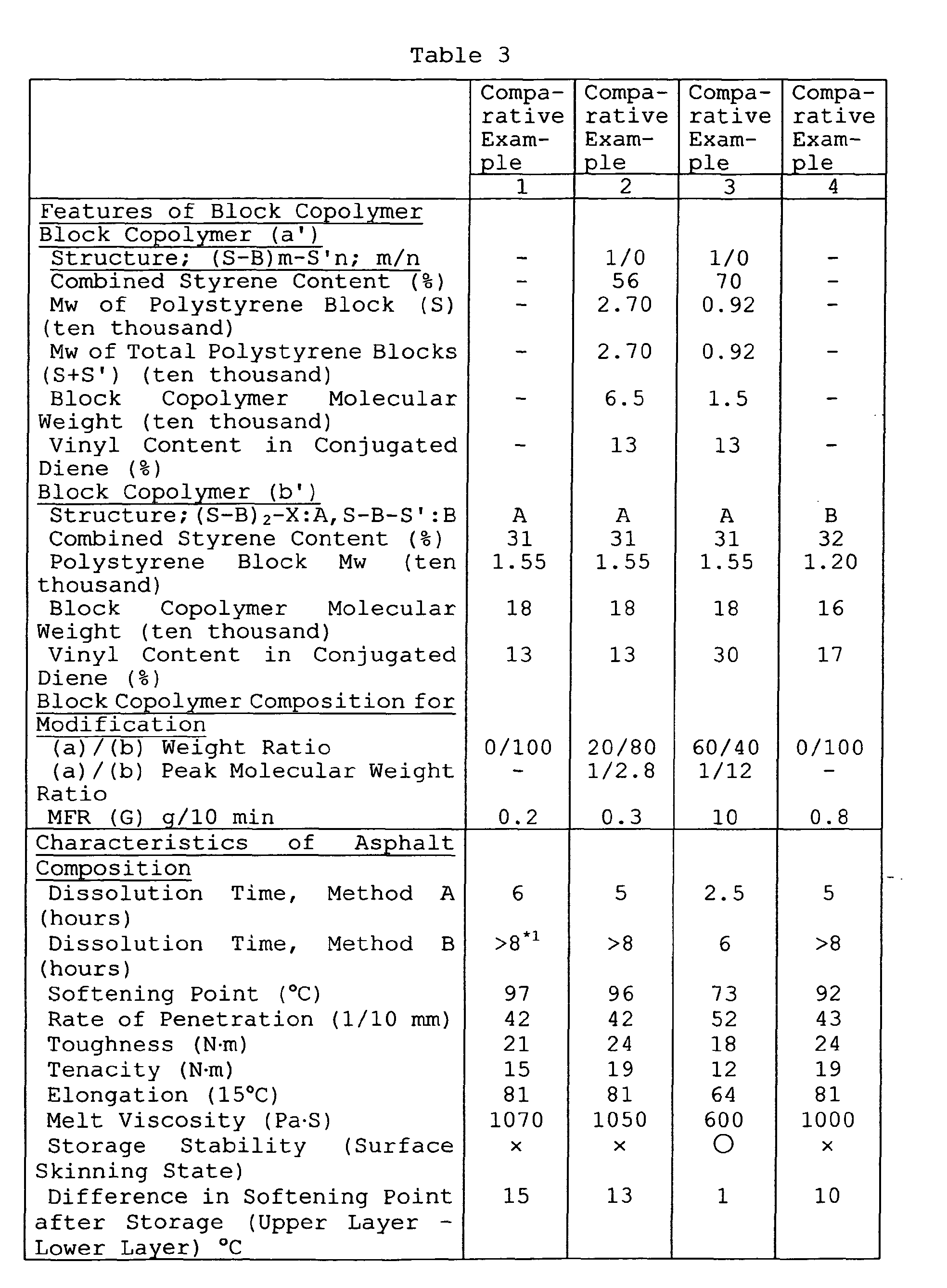

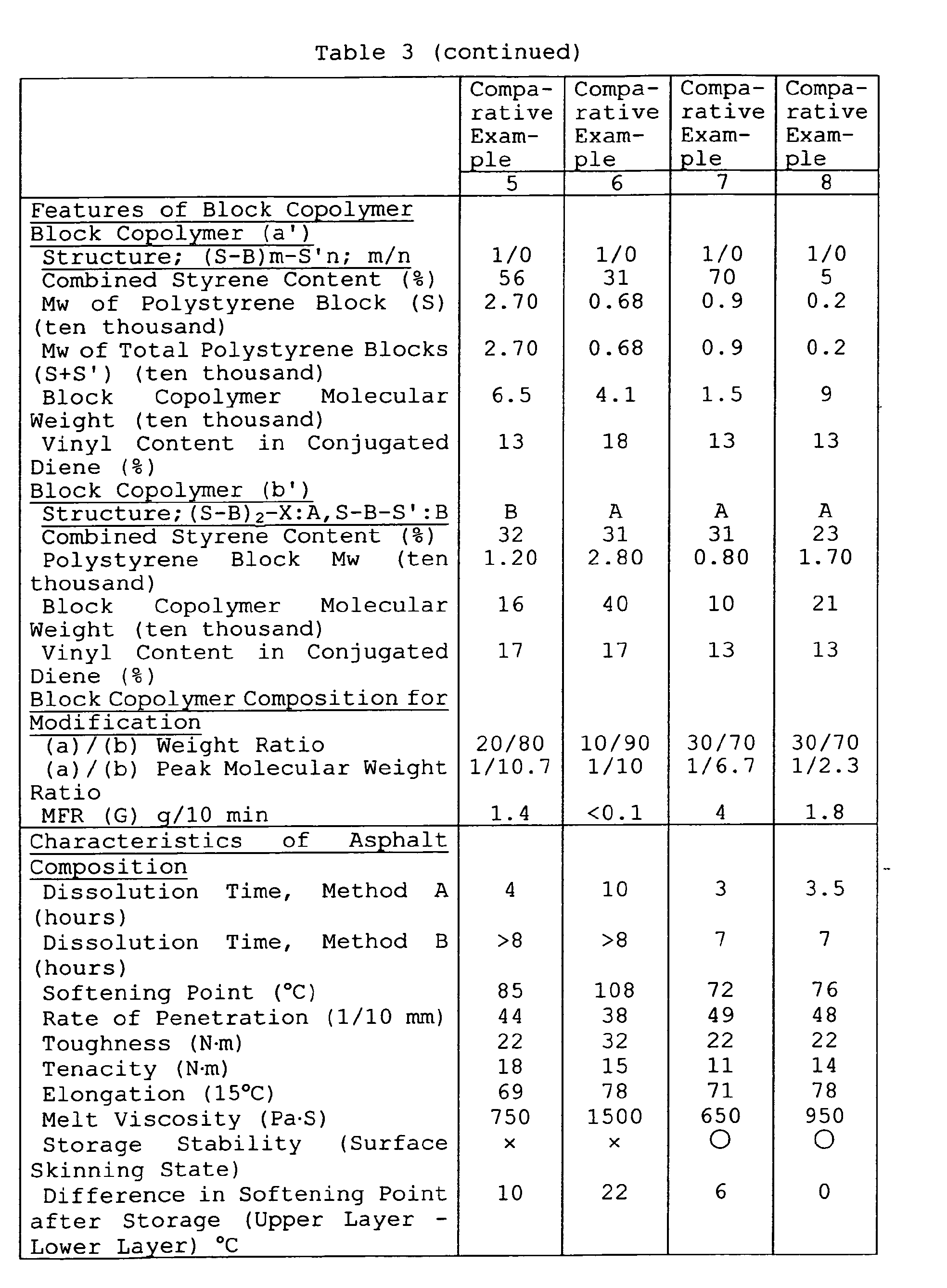

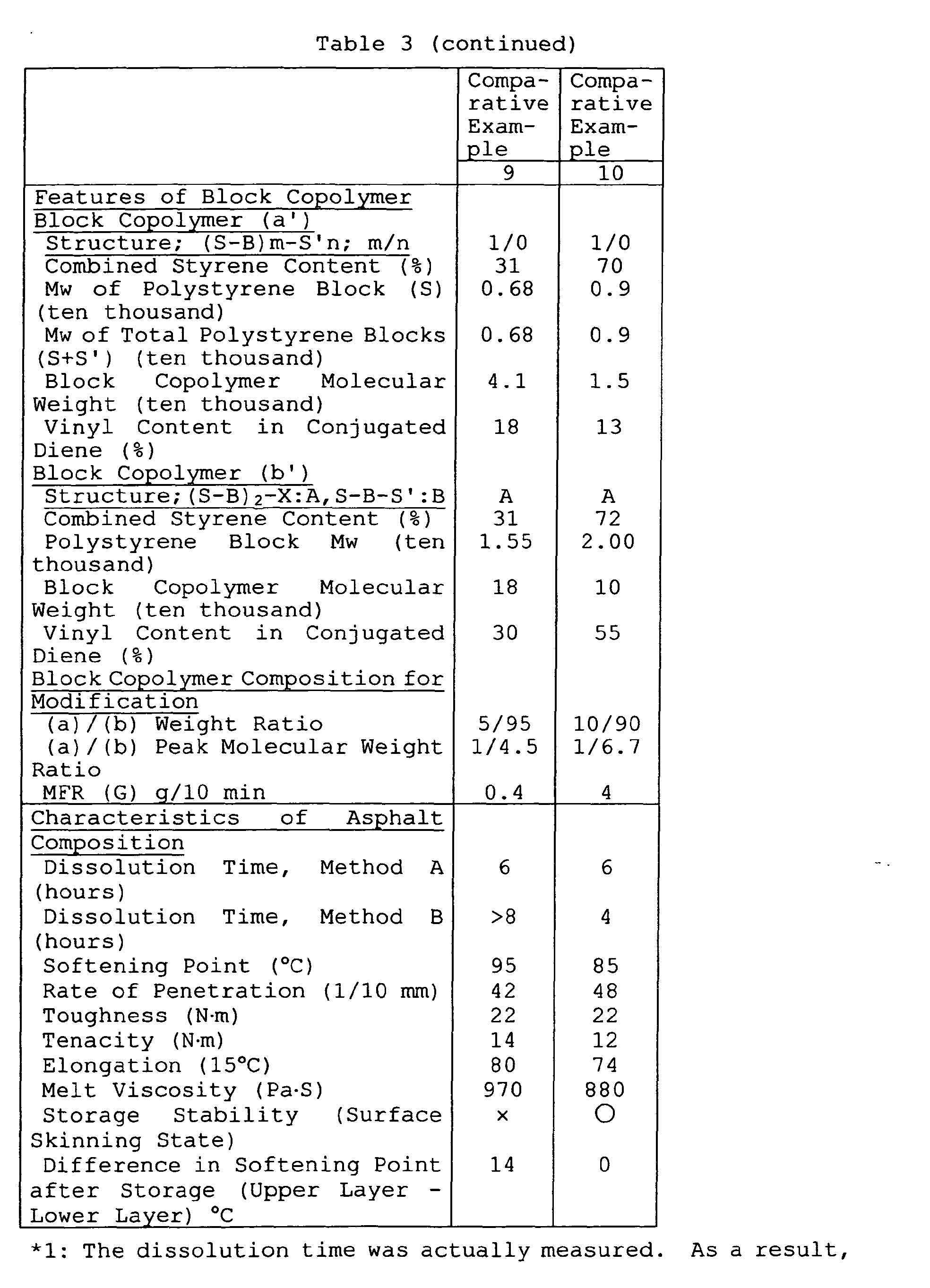

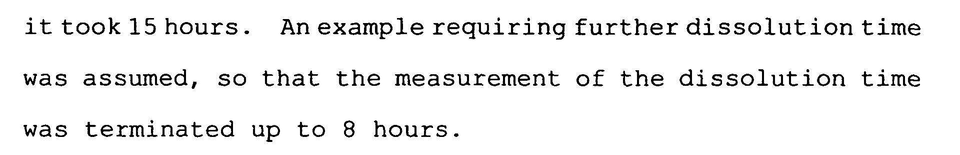

Tables 1 and 2 show that the asphalt compositions of the present invention are short in dissolution time in asphalt, low in melt viscosity and sufficient in storage stability, and indicate good toughness·tenacity, softening point and elongation.

In contrast, from Table 3, the asphalt compositions containing no block copolymer (a) of the present invention in Comparative Examples 1 and 4 are long in dissolution time, high in melt viscosity and inferior in storage stability. In Comparative Examples 2 and 5 in which the molecular weight of the polymer block S of block copolymer (a) incorporated into block copolymer (b) is outside the range of the present invention, the dissolution time is long, and the storage stability is also poor. In Comparative Example 3 in which block copolymer (a) of the present invention is incorporated in large amounts, the softening point, toughness·tenacity and elongation are inferior. Further, in Comparative Examples 6 to 10, the compositions comprise the copolymers departing from the range of block copolymer (a) or block copolymer (b) of the present invention, and the satisfactory physical properties are not obtained for all the compositions.

Examples 25 to 27 (Examples in Which Aromatic Hydrocarbon Resin and Heavy Oil Are Used Together)

Sixty grams of each of block copolymer compositions shown in Table 4, which were obtained in the same manner as with Example 12 with the exception that the amounts of styrene, 1, 3-butadiene and sec-butyllithium charged were changed, 30 g of an aromatic hydrocarbon resin (manufactured by Yasuhara Chemical Co., Ltd. : Mighty Ace 150), 60 g of an aromatic process oil (manufactured by Idemitsu Kosan Co., Ltd. : AE20H) and 600 g of straight asphalt having a rate of penetration of 70 (manufactured by Kyodo Petroleum Co., Ltd., 60/80) were mixed by a stirrer (manufactured by Tokushu Kika Kogyo Co., Ltd., TK Homomixer, 10,000 rpm) with heating at 180°C to prepare each asphalt composition. The evaluation results of the respective characteristics are shown in Table 4.

### Comparative Example 11

An asphalt composition was prepared in the same manner as with Example 25, using a block copolymer shown in Table 4, which were obtained in the same manner as with Example 12 with the exception that the amounts of styrene, 1,3-butadiene and sec-butyllithium charged were changed. The evaluation results of the respective characteristics are shown in Table 4.

### Comparative Examples 12 to 15

Asphalt compositions were prepared in the same manner as with Example 25 with the exception that block copolymer (b) used in Example 25 was used in compounding compositions shown in Table 4. The evaluation results of the respective characteristics are shown in Table 4.

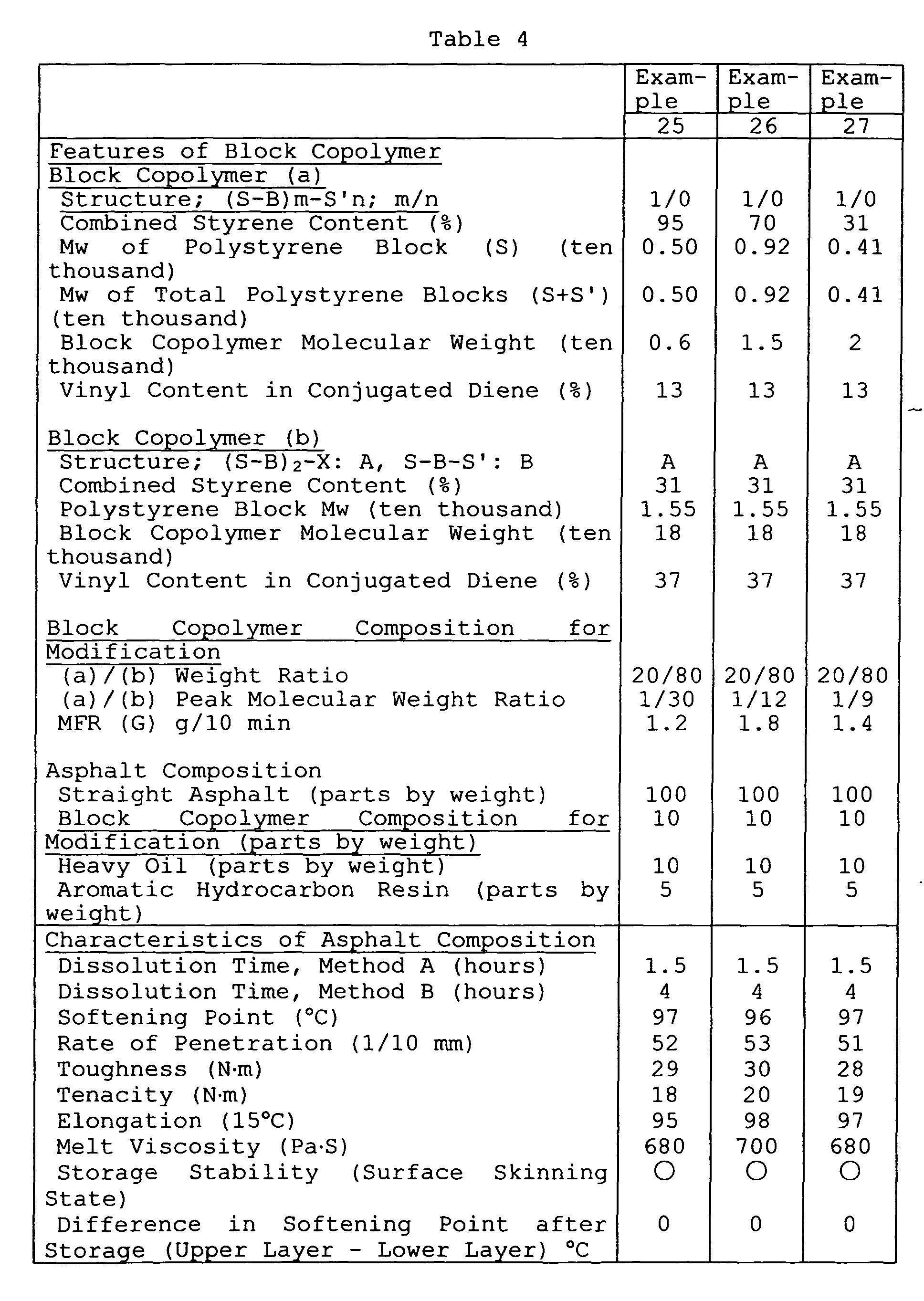

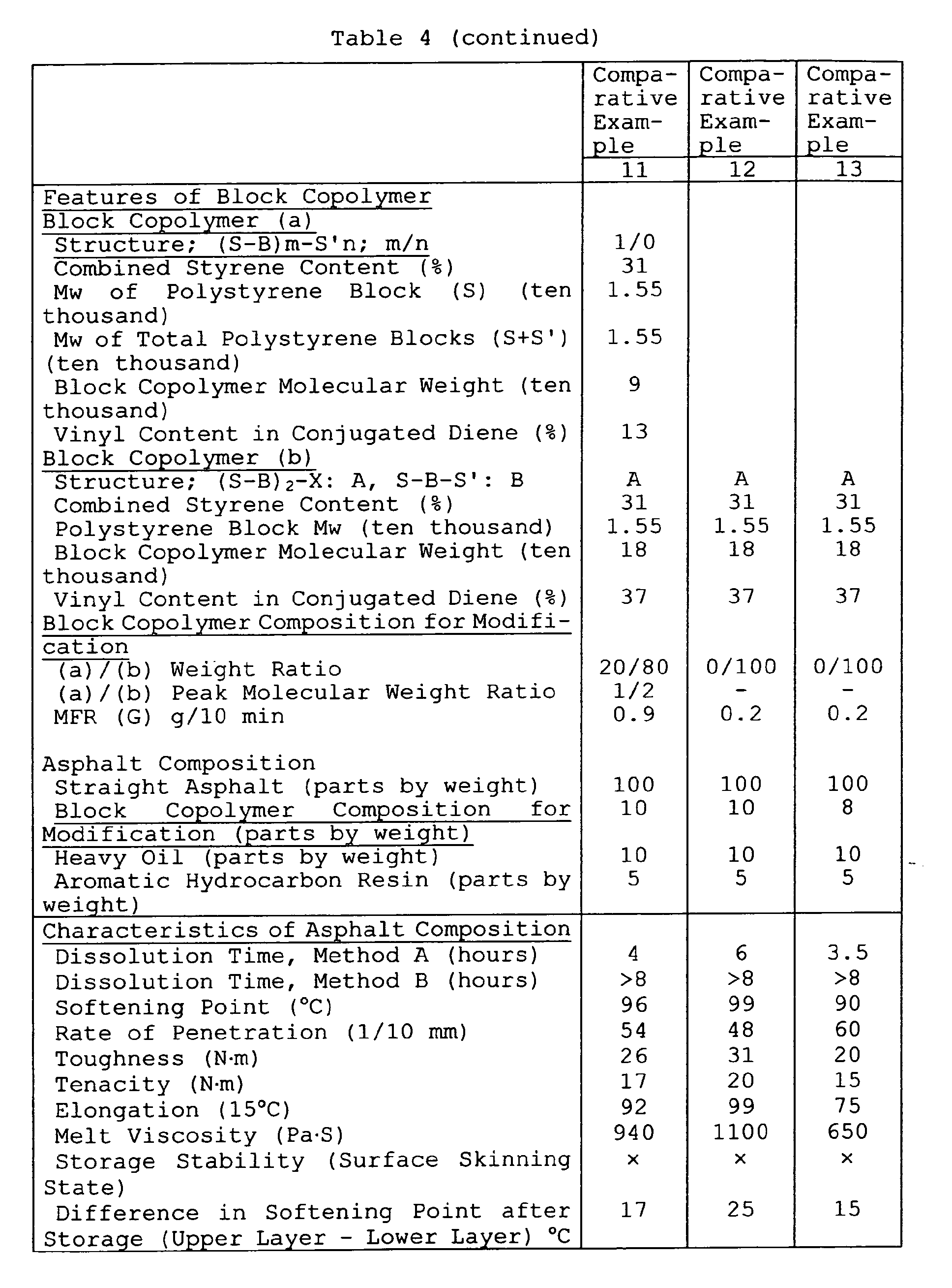

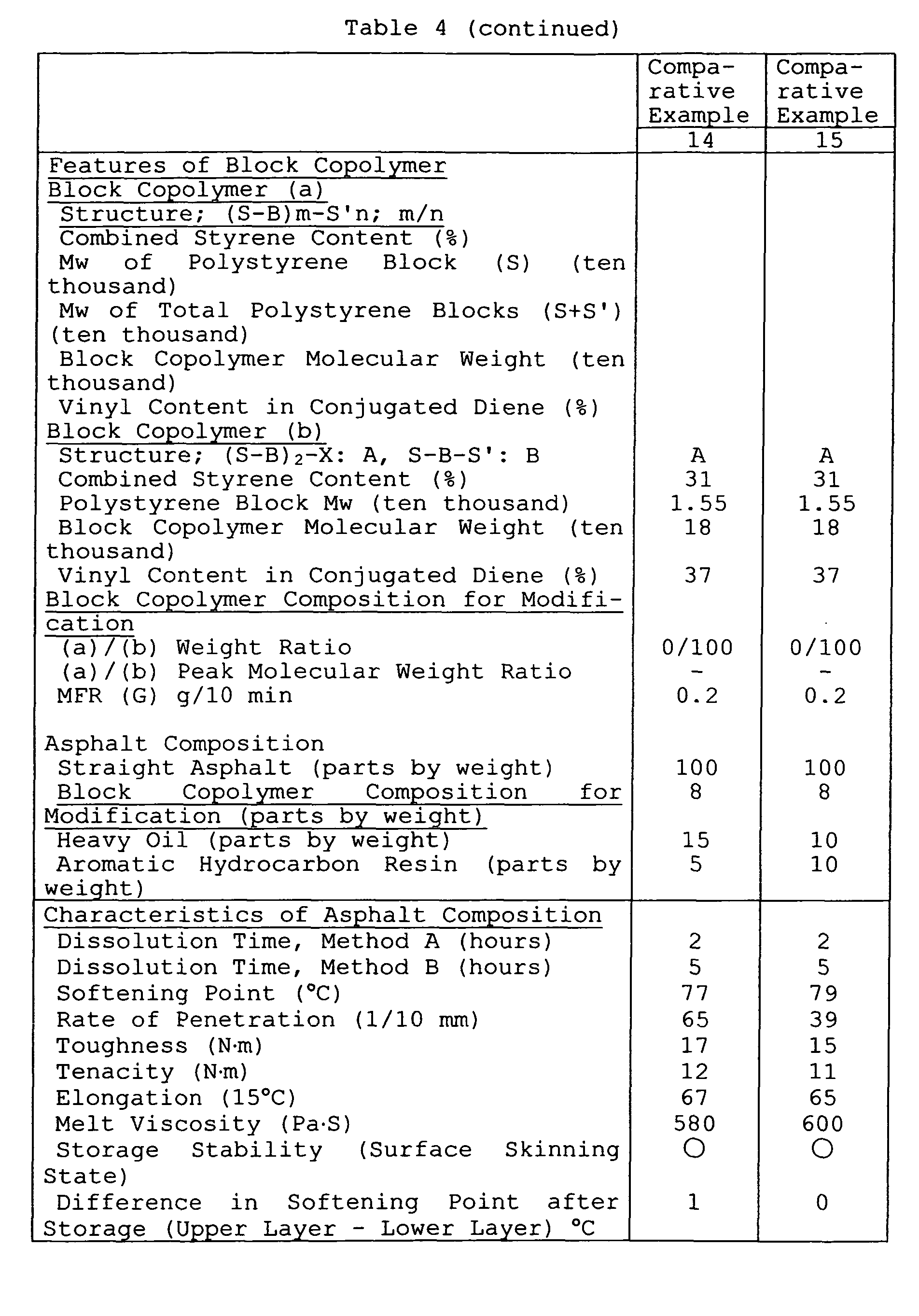

Table 4 shows that the asphalt compositions of Examples 25 to 27, in which the aromatic hydrocarbon resin and heavy oil within the ranges of the present invention are used together, are short in dissolution time in asphalt, low in melt viscosity and sufficient in storage stability, and indicate good toughness·tenacity, softening point and elongation.

In contrast, in Comparative Example 11 of Table 4 in which the molecular weight of the polymer block of (a) is outside the range of the present invention, the dissolution time is long, and the storage stability is also poor. In Comparative Examples 12 to 15, the asphalt compositions contain no block copolymer (a) of the present invention, and lack a balance among the dissolution time, softening point, rate of penetration, toughness·tenacity and storage stability. The satisfactory physical properties are not obtained for all the compositions.

### Industrial Applicability

Block (co) polymer (a) of the present invention can easily compatibilize asphalt with the asphalt modifier mainly composed of the copolymer of the aromatic vinyl compound and the conjugated diene, and can also design the optimum structure to the asphalt or asphalt modifier used. The (co)polymer is therefore suitable as a compatibilizer.

Further, the composition for asphalt modification of the present invention is a composition of block (co)polymer (a) of the present invention and the asphalt modifier, and extremely excellent in solubility. Incorporation of such a composition for asphalt modification into straight asphalt or the like can provide the asphalt composition well balanced among the characteristics such as the toughness·tenacity, softening point and elongation of asphalt, and furthermore, the asphalt composition available for road pavement, waterproof sheets, soundproof sheets, waterstop materials, roofing materials, sealing materials, covering materials, silencer sheets, steel pipe coatings and the like.

## Claims

1. A block (co)polymer which essentially comprises at least one aromatic vinyl compound polymer block and may contain this and at least one polymer block mainly composed of a conjugated diene, wherein the block (co)polymer is represented by general formula (I); (S-B)ₘ-S'ₙ (in formula (I), S and S' are each a polymer block mainly composed of an aromatic vinyl compound, B is a polymer block mainly composed of a conjugated diene, and m and n are each an integer of 0 or 1, provided that m+n is 1 or more), the total combined aromatic vinyl compound content in the block (co) polymer is from more than 10% by weight to 100% by weight, the vinyl bond content in the polymer block B mainly composed of the conjugated diene is from 10 to 50% by weight, the weight average molecular weight of the polymer block S is from 500 to 20,000, and the total weight average molecular weight of the polymer blocks S and S' is from 1,000 to 30,000.

2. The block (co)polymer according to claim 1, wherein the weight average molecular weight of the whole block (co)polymer is from 5,000 to 50,000.

3. The block (co)polymer according to claim 1 or 2,
wherein the total combined aromatic vinyl compound content in the block (co) polymer is from more than 10% by weight to less than 100% by weight.

4. A block copolymer composition for asphalt modification which comprises (a) the block (co)polymer according to any one of claims 1 to 3, and (b) a block copolymer comprising at least two polymer blocks mainly composed of an aromatic vinyl compound and at least one polymer block mainly composed of a conjugated diene, wherein the block copolymer is represented by general formula (II); S-B-S, general formula (III) ; S-B-S' and/or general formula (IV) ; (S-B)₂-X (in formulas (II) to (IV), S, S' and B have the same meanings as given in general formula (I), and X is a residue of a coupling agent), the total combined aromatic vinyl compound content in the block copolymer is from 20 to 70% by weight, the vinyl bond content in the polymer block B mainly composed of the conjugated diene is from 10 to 50% by weight, and the weight average molecular weight of the polymer blocks S and S' is from 10,000 to 20,000, at a block copolymer (a)/block copolymer (b) ratio (weight ratio) of 10-40/90-60.

5. The block copolymer composition for asphalt modification according to claim 4, wherein the peak molecular weight of block (co)polymer (a) measured by a gel permeation chromatograph (GPC) corresponds to 1/80 to less than 1/3 of the peak molecular weight of block copolymer (b).

6. A process for producing the block copolymer composition for asphalt modification according to claim 4 or 5, which comprises each separately polymerizing block (co)polymer (a) and block copolymer (b) by a solution polymerization method using an organic lithium compound as an initiator in an inert hydrocarbon solvent, and mixing and homogenizing the resulting respective polymer solutions, followed by desolvation.

7. A process for producing the block copolymer composition for asphalt modification according to claim 4 or 5, which comprises concurrently polymerizing block (co) polymer (a) and block copolymer (b) by a solution polymerization method using an organic lithium compound as an initiator in an inert hydrocarbon solvent, and adding the initiator at least twice and an aromatic vinyl compound and a conjugated diene at least once in polymerizing the aromatic vinyl compound and the conjugated diene at a polymerization stage at which they are sequentially added.

8. An asphalt composition containing the composition according to claim 4 or 5 and straight asphalt at a composition according to claim 4 or 5/straight asphalt ratio (weight ratio) of 2-15/85-98.

9. An asphalt composition comprising the composition according to claim 4 or 5, straight asphalt, an aromatic hydrocarbon resin and heavy oil, at ratios of 1 to 20 parts by weight of the composition according to claim 4 or 5, 0 to 40 parts by weight of the aromatic hydrocarbon resin, 0 to 40 parts by weight of the heavy oil and 1 to 60 parts by weight of the total of the aromatic hydrocarbon resin and the heavy oil, based on 100 parts by weight of straight asphalt.

## Amended claims

### Amended claims under Art. 19.1 PCT

**1.** (Amended) A block (co)polymer which essentially comprises at least one aromatic vinyl compound polymer block and may contain this and at least one polymer block mainly composed of a conjugated diene,
wherein the block (co)polymer is represented by general formula (I) ; (S-B)ₘ-S'ₙ (in formula (I), S and S' are each a polymer block mainly composed of an aromatic vinyl compound, B is a polymer block mainly composed of a conjugated diene, and m and n are each an integer of 0 or 1, provided that m+n is 1 or more), the total combined aromatic vinyl compound content in the block (co) polymer is from more than 10% by weight to 100% by weight, the vinyl bond content in the polymer block B mainly composed of the conjugated diene is from 10 to 50% by weight, the weight average molecular weight of the polymer block S is from 500 to 20,000, the total weight average molecular weight of the polymer blocks S and S' is from 1,000 to 30,000, and the weight average molecular weight of the whole block (co)polymer is from 5,000 to 50,000.

**2.** (Canceled)

**3.** (Amended) The block (co)polymer according to claim 1, wherein the total combined aromatic vinyl compound content in the block (co)polymer is from more than 10% by weight to less than 100% by weight.

**4.** (Amended) A block copolymer composition for asphalt modification which comprises (a) the block (co)polymer according to any one of claims 1 and 3, and (b) a block copolymer comprising at least two polymer blocks mainly composed of an aromatic vinyl compound and at least one polymer block mainly composed of a conjugated diene, wherein the block copolymer is represented by general formula (II); S-B-S, general formula (III); S-B-S' and/or general formula (IV); (S-B)₂-X (in formulas (II) to (IV), S, S' and B have the same meanings as given in general formula (I), and X is a residue of a coupling agent), the total combined aromatic vinyl compound content in the block copolymer is from 20 to 70% by weight, the vinyl bond content in the polymer block B mainly composed of the conjugated diene is from 10 to 50% by weight, and the weight average molecular weight of the polymer blocks S and S' is from 10,000 to 20,000, at a block copolymer (a)/block copolymer (b) ratio (weight ratio) of 10-40/90-60.

**5.** The block copolymer composition for asphalt modification according to claim 4, wherein the peak molecular weight of block (co)polymer (a) measured by a gel permeation chromatograph (GPC) corresponds to 1/80 to less than 1/3 of the peak molecular weight of block copolymer (b).

**6.** A process for producing the block copolymer composition for asphalt modification according to claim 4 or 5, which comprises each separately polymerizing block (co)polymer (a) and block copolymer (b) by a solution polymerization method using an organic lithium compound as an initiator in an inert hydrocarbon solvent, and mixing and homogenizing the resulting respective polymer solutions, followed by desolvation.

**7.** A process for producing the block copolymer composition for asphalt modification according to claim 4 or 5, which comprises concurrently polymerizing block (co)polymer (a) and block copolymer (b) by a solution polymerization method using an organic lithium compound as an initiator in an inert hydrocarbon solvent, and adding the initiator at least twice and an aromatic vinyl compound and a conjugated diene at least once in polymerizing the aromatic vinyl compound and the conjugated diene at a polymerization stage at which they are sequentially added.

**8.** An asphalt composition containing the composition according to claim 4 or 5 and straight asphalt at a composition according to claim 4 or 5/straight asphalt ratio (weight ratio) of 2-15/85-98.

**9.** An asphalt composition comprising the composition according to claim 4 or 5, straight asphalt, an aromatic hydrocarbon resin and heavy oil, at ratios of 1 to 20 parts by weight of the composition according to claim 4 or 5, 0 to 40 parts by weight of the aromatic hydrocarbon resin, 0 to 40 parts by weight of the heavy oil and 1 to 60 parts by weight of the total of the aromatic hydrocarbon resin and the heavy oil, based on 100 parts by weight of straight asphalt.

Statement under Art. 19.1 PCT
Claim 1 is amended to make clear the range of application of the present invention by specifying the molecular weight of the whole block copolymer of the present invention, and this is based on that "the weight average molecular weight of the whole block (co)polymer is preferably from 5,000 to 50,000", which is described at page 11, lines 9 to 10 of the specification of the present application.

Claim 1 is amended as described above, whereby the description of claim 2 is included in claim 1. Claim 2 is therefore cancelled.

Claims 3 and 4 are amended, because the claims on which they are dependent are changed by the above-mentioned amendment or cancellation.

Cited reference 1 (JP 2002-60583 A) discloses a block copolymer (composition) for asphalt modification containing (a) a block copolymer represented by general formula (I); A₁-B-A₂, and (b) a block copolymer represented by general formula (II); (A₁-B-A₂)ₙX at a (a)/(b) component weight ratio of 40-100/60-0, and having a weight average molecular weight of 100,000 to 300,000. In contrast, the present invention is directed to a block (co) polymer represented by general formula (I) ; (S-B)ₘ-S'ₙ, and the weight average molecular weight of the whole block (co)polymer is from 5,000 to 50,000, which is different from cited reference 1 in the range thereof. Cited reference 1 does not teach at all that the weight average molecular weight of the whole block (co) polymer in the present invention is from 5,000 to 50,000. In the present invention, claim 1 is amended as described above, so that it becomes completely different from the technique described in cited reference 1.
